(19) **Europäisches Patentamt**
**European Patent Office**
**Office européen des brevets**

(11) **EP 4 319 333 A1**

(12) **EUROPEAN PATENT APPLICATION**
published in accordance with Art. 153(4) EPC

(43) Date of publication:
**07.02.2024  Bulletin 2024/06**

(21) Application number: **21935143.4**

(22) Date of filing: **25.11.2021**

(51) International Patent Classification (IPC):
**H04W 56/00** (2009.01)  **H04W 72/04** (2023.01)
**H04W 72/12** (2023.01)  **H04W 74/08** (2024.01)

(52) Cooperative Patent Classification (CPC):
**H04W 56/00; H04W 72/04; H04W 72/12;**
**H04W 74/08**

(86) International application number:
**PCT/JP2021/043181**

(87) International publication number:
**WO 2022/208990 (06.10.2022 Gazette 2022/40)**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(30) Priority: **29.03.2021  JP 2021055853**

(71) Applicant: **Panasonic Intellectual Property**
**Corporation**
**of America**
**Torrance, CA 90504 (US)**

(72) Inventors:
• **NISHIO, Akihiko**
**Kadoma-shi, Osaka 571-0057 (JP)**
• **SUZUKI, Hidetoshi**
**Kadoma-shi, Osaka 571-0057 (JP)**

(74) Representative: **Grünecker Patent- und**
**Rechtsanwälte**
**PartG mbB**
**Leopoldstraße 4**
**80802 München (DE)**

(54) **TERMINAL, BASE STATION, AND COMMUNICATION METHOD**

(57)    A terminal according to the present invention comprises: a control circuit that, on the basis of a control signal pertaining to uplink transmission, determines a transmission opportunity, using a cell-specific offset or a parameter differing from the cell-specific offset; and a transmission circuit that carries out uplink transmission at the transmission opportunity.

FIG. 8

EP 4 319 333 A1

**Description**

Technical Field

The present disclosure relates to a terminal, a base station, and a communication method.

Background Art

In the standardization of 5G, New Radio access technology (NR) was discussed in 3GPP, and the specification of Release 15 (Rel. 15) of NR was published.

Citation List

Non-Patent Literature

NPL 1
3GPP, TR 38.821, V16.0.0 "Solutions for NR to support non-terrestrial networks (NTN) (Release 16)," 2019-12
NPL 2
3GPP, TS 38.321, V16.3.0 "Medium Access Control (MAC) protocol specification (Release 16)," 2020-12

Summary of Invention

There is scope for further study, however, on appropriate timing control depending on a propagation delay between a terminal and a base station.
One non-limiting and exemplary embodiment of the present disclosure facilitates providing a terminal, a base station, and a communication method capable of realizing appropriate timing control depending on a propagation delay between a terminal and a base station.
A terminal according to one exemplary embodiment of the present disclosure includes: control circuitry, which, in operation, determines a transmission occasion based on a control signal related to uplink transmission using either of a cell-specific offset and a parameter different from the cell-specific offset, and transmission circuitry, which, in operation, performs the uplink transmission in the transmission occasion.
It should be noted that a general or specific embodiment may be implemented as a system, an apparatus, a method, an integrated circuit, a computer program, a storage medium, or any selective combination thereof.
According to one exemplary embodiment of the present disclosure, it is possible to realize appropriate timing control depending on a propagation delay between a terminal and a base station.
Additional benefits and advantages of one aspect of the present disclosure will become apparent from the specification and drawings. The benefits and/or advantages may be individually obtained by the various embodiments and features of the specification and drawings, which need not all be provided in order to obtain one or more of such benefits and/or advantages.

Brief Description of Drawings

FIG. 1 illustrates an example of a transmission slot timing;
FIG. 2 is a diagram illustrating an example of a propagation delay within a cell of a satellite;
FIG. 3 is a diagram illustrating an example of a cell-specific offset and a terminal-specific offset;
FIG. 4 illustrates an example of application of the offsets to a PDCCH order RACH;
FIG. 5 is a block diagram illustrating a configuration example of a part of a base station;
FIG. 6 is a block diagram illustrating a configuration example of a part of a terminal;
FIG. 7 is a block diagram illustrating an example of a configuration of the base station;
FIG. 8 is a block diagram illustrating an example of a configuration of the terminal;
FIG. 9 is a diagram illustrating one exemplary transmission timing of a PDCCH order RACH according to Embodiment 1;
FIG. 10 is a diagram illustrating one exemplary relationship between offsets and RACH Occasions (ROs) according to Embodiment 1;

FIG. 11 illustrates one exemplary transmission timing of a PDCCH order RACH according to Embodiment 3;

FIG. 12 illustrates one exemplary transmission timing of the PDCCH order RACH according to Embodiment 3;

FIG. 13 illustrates one exemplary transmission timing of the PDCCH order RACH according to Embodiment 3;

FIG. 14 illustrates an exemplary architecture for a 3GPP NR system;

FIG. 15 is a schematic drawing that illustrates a functional split between NG-RAN and 5GC;

FIG. 16 is a sequence diagram for RRC connection setup/reconfiguration procedures;

FIG. 17 is a schematic diagram illustrating usage scenarios of enhanced Mobile BroadBand (eMBB), massive Machine Type Communications (mMTC), and Ultra Reliable and Low Latency Communications (URLLC); and

FIG. 18 is a block diagram illustrating an exemplary 5G system architecture for a non-roaming scenario.

Description of Embodiments

Hereinafter, embodiments of the present disclosure will be described in detail with reference to the accompanying drawings.

[Extension to Non-Terrestrial Network (NTN)]

Rel. 15 has been specified as a radio access technology for terrestrial networks. Meanwhile, an extension of NR to a Non-Terrestrial Network (NTN) such as communication using a satellite or a High-altitude platform station (HAPS) has been studied (e.g., NPL 1).

In an NTN environment, coverage areas (e.g., one or more cells) of a satellite for a terrestrial terminal (e.g., also referred to as user equipment (UE)) or an airborne terminal such as an airplane or drone are formed by beams from the satellite. Further, a round trip time (RTT) of radio wave propagation between the terminal and the satellite is determined by the altitude of the satellite (e.g., approximately up to 36,000 km) and the angle when seen from the terminal, that is, the locational relation between the satellite and the terminal.

For example, NPL 1 describes that the Round Trip Time (RTT) of radio wave propagation between the base station (e.g., also referred to as "gNB") and the terminal takes up to approximately 540 ms in the NTN. NPL 1 also describes that the maximum differential delay of approximately 10 ms occurs depending on the location of the terminal in a beam (in a cell). The maximum differential delay may indicate, for example, a difference between, on one hand, the round-trip time between a terminal at the farthest location from the satellite and the satellite and, on the other hand, the round-trip time between a terminal at the nearest location from the satellite and the satellite within the beam (within the cell).

[Random Access Procedure]

In 5G NR, the terminal performs transmission using a Random Access Channel (RACH) for an initial access, a data transmission request, and the like. For example, the random access procedure may be performed with a 4-step random access (also referred to as a 4-step Random Access Channel (RACH) or a 4-step Contention Based Random Access (Step CBRA)).

In the 4-step random access, the terminal transmits a Preamble signal of a Physical Random Access Channel (PRACH) to the base station in a first-step transmission (MSG1). The MSG1 transmission by the terminal is performed at a transmission timing (slot timing or RACH Occasion (RO)) indicated in a cell-specific manner from the base station. In the following description, transmitting a PRACH signal (e.g., a Preamble signal) may be abbreviated as "PRACH transmission" or "transmitting a PRACH." Also, in the following, receiving a PRACH signal may be described as "PRACH reception" or "receiving a PRACH." The transmission and reception of signals of other channels may also be abbreviated in the same manner.

The base station receives and decodes MSG1, and indicates an RA response (Random Access response (RAR)) to the Preamble signal of PRACH, scheduling information including an uplink transmission timing of MSG3, and the like to the terminal in the second-step transmission (MSG2).

The terminal receives and decodes MSG2, and indicates information for establishing a Connection such as information on the terminal (e.g., terminal ID or the like) and the like to the base station in the third-step transmission (MSG3) by using the scheduling information indicated in MSG2. MSG3 may be indicated, for example, in an uplink data channel (e.g., Physical Uplink Shared Channel (PUSCH)). The information indicated by MSG3 may be referred to as Radio Resource Control (RRC) connection request information.

The base station receives and decodes MSG3, and indicates a Connection establishment response and the like in the fourth-step transmission (MSG4).

[Timing Adjustment]

In 5GNR, the transmission timing for the terminal is controlled such that signals from different terminals in the cell are within a certain period of time at the base station. For example, the phrase "within a certain period of time" may mean "within a Cyclic Prefix (CP) of an Orthogonal Frequency Division Multiplexing (OFDM) signal or a Discrete Fourier Transform-Spread-OFDM (DFT-S-OFDM) signal."

In the random access procedure, transmission of MSG1 by the terminal is performed at a PRACH transmission timing (RACH Occasion) that is a candidate to be indicated by the base station in a cell-specific manner. In this case, the terminal determines the transmission timing based on the reception timing of a synchronization signal called Synchronization Signal (SS)/Physical Broadcast channel (PBCH) Block (SSB) transmitted by the base station in the downlink. Accordingly, depending on a propagation delay between the base station and the terminal, the reception timing at the base station can deviate from the reception timing assumed by the base station. Here, the reception timing assumed by the base station is, for example, a reception timing determined based on the PRACH transmission timing (RACH Occasion) indicated by the base station in a cell-specific manner.

For a deviation from the reception timing assumed in the base station, for example, the base station transmits information for correcting (adjusting) the timing to the terminal in MSG2. The information for correcting (adjusting) the timing may, for example, be referred to as a TA (Timing Advance) command (e.g., NPL 2). The terminal corrects the MSG3 transmission timing and later transmission timings, for example, based on the TA command included in MSG2. In addition, the base station may transmit a TA command to the terminal when a shift in reception timing is detected in transmission and reception of the MSG3 signal or signals subsequent to MSG3.

In addition, in 5G NR, a case where RACH transmission is triggered by the base station is not limited to the initial access, and the RACH transmission is also triggered in a case where the terminal being connected to the base station (for example, in the RRC_CONNECTED state) has not performed communication for a while, in a case where downlink transmission data addressed to the terminal arrives at the terminal in a situation in which the terminal is likely to be out of synchronization, such as a situation of expiration of a TA timer, or the like. The RACH transmissions may be triggered using, for example, a downlink control channel (e.g., Physical Downlink Shared Channel (PDCCH)). A RACH transmission triggered using the PDCCH is referred to, for example, as "PDCCH order RACH," one example of which will be described below.

In the NTN, since the communication between the base station and the terminal is long distance communication, the propagation delay between the base station and the terminal is large and a difference in propagation delay between terminals is large as compared with the terrestrial cellular system. For example, it is considered that the terminal calculates the propagation delay based on the distance between the terminal and the satellite estimated using the location information on the terminal obtained by a Global Navigation Satellite System (GNSS) or the like and the location information on the satellite obtained from the orbital information on the satellite (satellite ephemeris), and that the terminal autonomously performs timing adjustment.

For 5G NR, in Rel. 15, a timing of a transmission slot is specified.

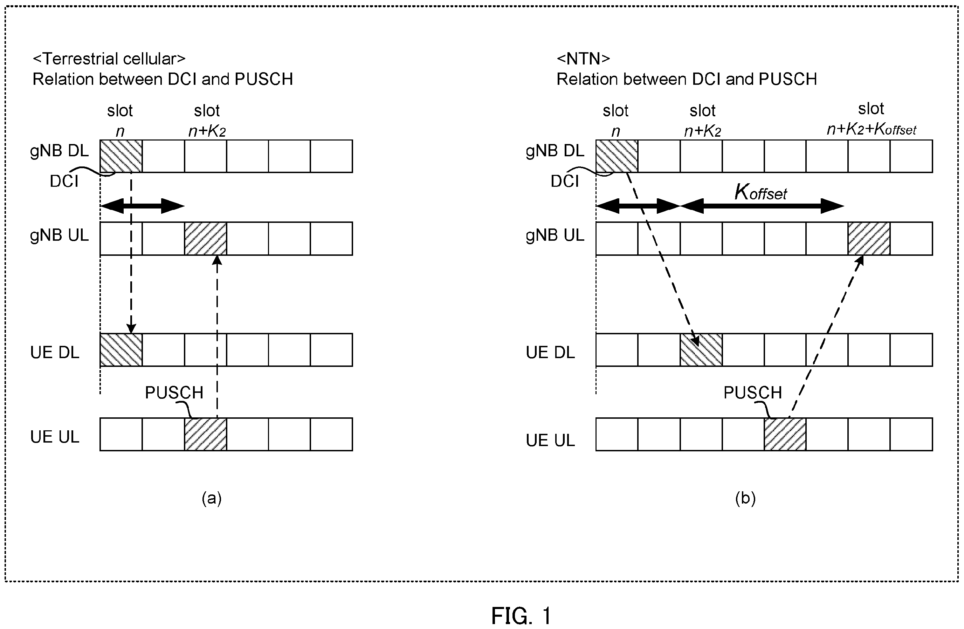

FIG. 1 illustrates an example of transmission slot timings. FIG. 1 illustrates an example (FIG. 1(a)) of a transmission slot timing for a terrestrial cellular specified in Rel. 15 and an example (FIG. 1(b)) of a transmission slot timing considered for the NTN.

FIG. 1 exemplarily illustrates DL transmission slots and UL reception slots for the base station (gNB), and DL reception slots and UL transmission slots for the terminal (UE). Note that, the horizontal axis of FIG. 1 represents the time axis.

In NR Rel. 15 (e.g., in the terrestrial cellular), the transmission timing for a UL signal, such as a hybrid automatic repeat request-acknowledgement (HARQ-ACK) or PUSCH, may be defined based on a transmission slot timing (e.g., also referred to as a reference slot) of a DL signal such as downlink control information (e.g., Downlink Control Information (DCI) or a downlink data signal (e.g., Physical Downlink Shared Channel (PDSCH)). For example, the transmission timing for a UL signal may be defined using an offset from the transmission slot (also referred to as the reference slot, for example) of a DL signal.

Examples of the offset include "K1" indicating a timing offset from a PDSCH to HARQ-ACK and "$K_2$" indicating a timing offset from DCI to a PUSCH. Note that timing offset $K_1$ from the PDSCH to a HARQ-ACK transmission may be referred to as "PDSCH-to-HARQ_feedback timing indicator." In FIG. 1(a), according to the specifications for the transmission slot timing in Rel. 15, a signal including the DCI is transmitted in the n-th slot by the base station to the terminal, and a PUSCH signal is transmitted in the $n+K_2$-th slot by the terminal to the base station.

Meanwhile, in the NTN, as illustrated in FIG. 1(b), the configuration for offset "Koffset" for correcting a propagation delay longer than that in the terrestrial cellular is studied with respect to the definition of the transmission slot timing in Rel. 15.

For example, Koffset may be used by the base station to designate a reception timing (for example, a slot) for the base station to receive a UL signal. The UL signal may include, for example, uplink control information (Physical Uplink Control Channel (PUCCH) including Uplink Control Information (UCI) such as HARQ-ACK or a PUSCH including an uplink data signal.

For Koffset, for example, cell-specific Koffset to be indicated (or broadcast) in a cell-specific manner (e.g., referred to as "$K_{offset,cell}$") and terminal-specific (UE-specific) Koffset to be indicated in a terminal-specific manner ($K_{offset,UE}$) are considered. In the following description, $K_{offset,cell}$ and $K_{offset,UE}$ may be abbreviated as "Koffset."

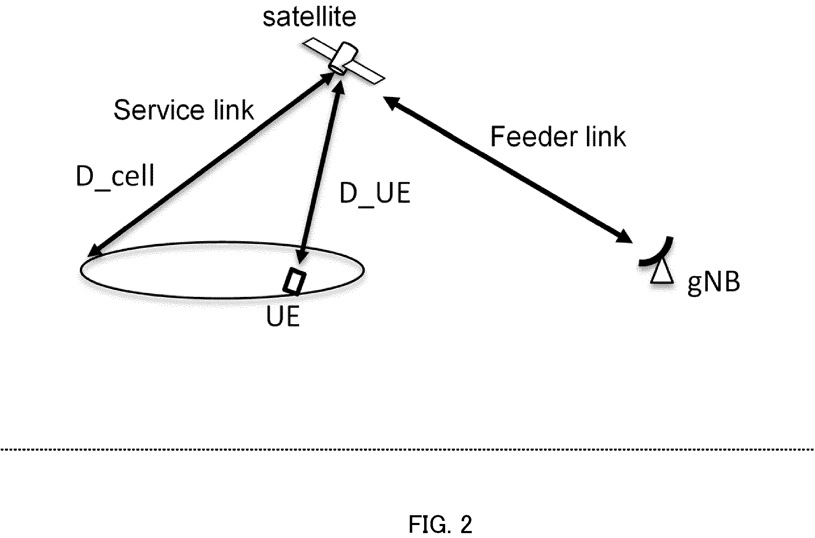

For example, as illustrated in FIG. 2, cell-specific Koffset may be configured based on the RTT for the location where a propagation delay (for example, D_cell) between a satellite (or a base station) and a terminal is the largest in the cell. For example, cell-specific Koffset may be included in system information and broadcast in the entire cell. Further, as illustrated in FIG. 2, terminal-specific Koffset may be configured in a terminal-specific manner based on the location of a terminal (UE) or a propagation delay (for example, D_UE). Terminal-specific Koffset may be indicated to the terminal in a terminal-specific manner, for example.

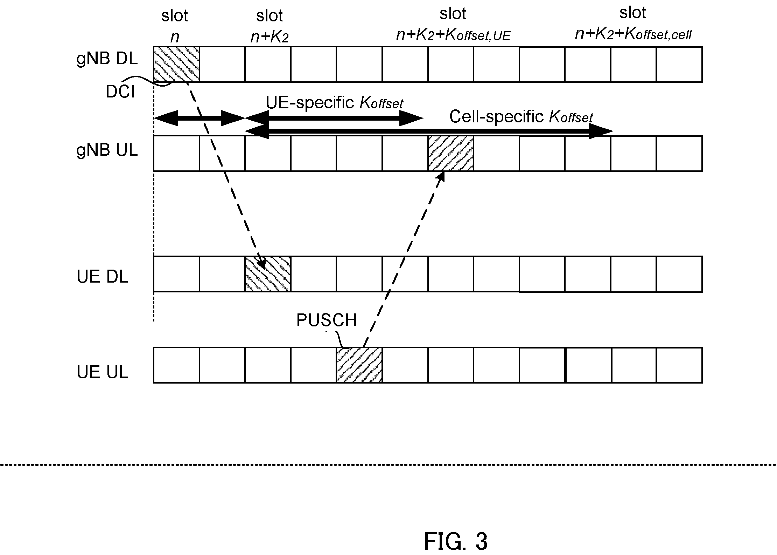

FIG. 3 is a diagram illustrating one exemplary transmission slot timing based on terminal-specific Koffset. In FIG. 3, for example, the timing of PUSCH transmission of the terminal (UE) may be configured such that the base station (gNB) receives the PUSCH in the slot (e.g., slot ($n + K_2 + K_{offset,UE}$)) after offset $K_2$ and terminal-specific Koffset from the timing (slot n) at which the DCI is transmitted.

As illustrated in FIG. 3, the timing adjustment based on terminal-specific Koffset, for example, can reduce a data transmission delay as compared with the timing adjustment based on cell-specific Koffset because the timing adjustment is based on an RTT for each terminal.

[PDCCH order RACH]

NR Rel. 15 defines the PDCCH order RACH in which, for example, the terminal receives a PDCCH triggering a PRACH transmission and transmits a PRACH in the "next available RO."

In the terrestrial network, the propagation delay is shorter than that in the NTN and the transmission timing and the reception timing are substantially the same. Accordingly, it is very unlikely that the base station and the terminal recognize different "next available ROs."

On the other hand, in the NTN, the propagation delay is longer than that in the terrestrial network. It is thus likely for the base station and the terminal to recognize the "next available RO," differently. For this reason, introduction of Koffset for the PRACH transmission in the NTN has been studied. Due to the introduction of Koffset, the RO is determined depending on the propagation delay. Thus, inconsistency in recognition of the "next available RO" between the base station and the terminal is unlikely to occur.

However, the PDCCH order RACH can also be applied when the terminal is in the RRC_CONNECTED state and the base station does not identify (in other words, grasp) the synchronization state of the terminal. Accordingly, there is a possibility that the terminal misses the PRACH transmission in the RO specified by terminal-specific Koffset when the terminal for which terminal-specific Koffset is configured has moved farther away from the location at the time of Koffset configuration.

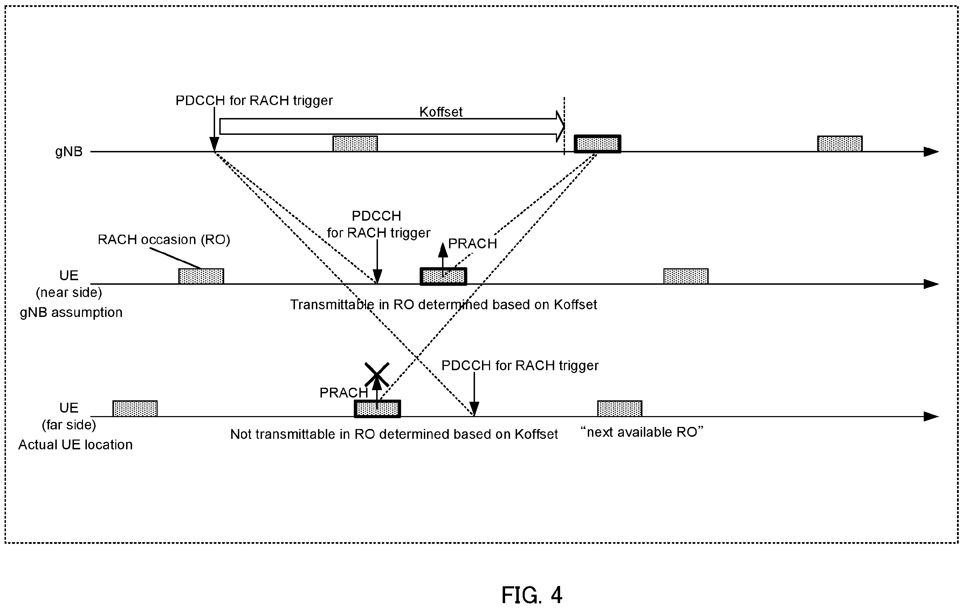

FIG. 4 illustrates a configuration example of an RO for the PDCCH order RACH. In FIG. 4, a base station (e.g., gNB) assumes reception of a PRACH at a timing based on terminal-specific Koffset from a transmission timing of a PDCCH that triggers PRACH transmission. The terminal (e.g., UE) may determine the RO based on the reception timing of the PDCCH triggering the PRACH transmission and terminal-specific Koffset, and transmit the PRACH in the determined RO.

Here, as illustrated in FIG. 4, when the actual location of the terminal is different from the location corresponding to terminal-specific Koffset configured for the terminal (for example, the location assumed by the base station) (for example, when the actual location is farther away from the base station (or satellite)), the timing at which the terminal actually transmits the PRACH may be different from (for example, may be later than) the timing of the PRACH assumed by the base station. In other words, it is possible that the terminal cannot transmit the PRACH at an appropriate transmission timing (e.g., RO) based on terminal-specific Koffset.

One exemplary non-limiting embodiment of the present disclosure achieves an appropriate timing control depending on a propagation delay between the terminal and the base station in an environment in which the propagation delay between the terminal and the base station is large, for example, in the NTN environment.

[Overview of Communication System]

A communication system according to an embodiment of the present disclosure includes base station 100 and terminal 200.

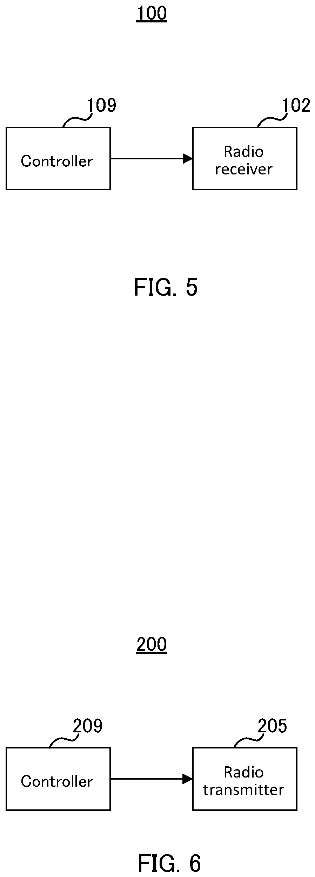

FIG. 5 is a block diagram illustrating a configuration example of a part of base station 100. In base station 100 illustrated in FIG. 5, controller 109 (corresponding to, for example, the control circuitry) determines a transmission occasion based on a control signal related to an uplink reception using either of a cell-specific offset and a parameter different from the cell-specific offset. Radio receiver 102 (corresponding to, for example, the reception circuitry) performs the uplink reception in the transmission occasion.

FIG. 6 is a block diagram illustrating a configuration example of a part of terminal 200. In terminal 200 illustrated in FIG. 6, controller 209 (corresponding to, for example, the control circuitry) determines a transmission occasion based on a control signal related to an uplink transmission using either of a cell-specific offset and a parameter different from the cell-specific offset. Radio transmitter 205 (for example, corresponding to the transmission circuitry) performs the uplink transmission in the transmission occasion.

(Embodiment 1)

[Configuration of Base Station]

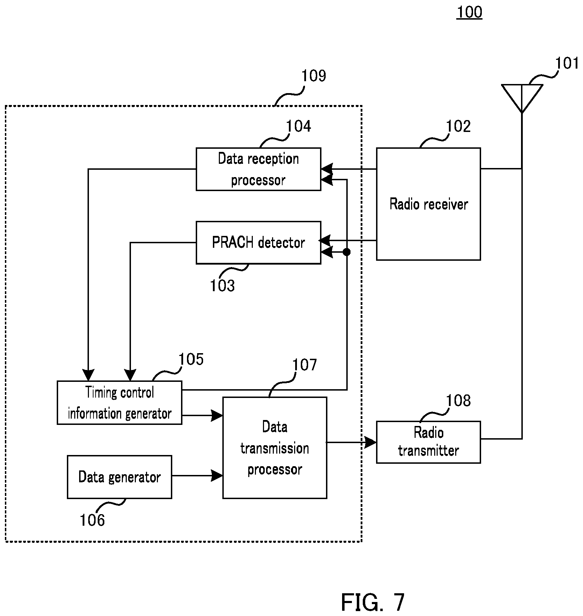

FIG. 7 is a block diagram illustrating an example of a configuration of base station 100 according to the present embodiment. Base station 100 includes antenna 101, radio receiver 102, PRACH detector 103, data reception processor 104, timing control information generator 105, data generator 106, data transmission processor 107, and radio transmitter 108. PRACH detector 103, data reception processor 104, timing control information generator 105, data generator 106, and data transmission processor 107 may be included in controller 109.

Radio receiver 102 performs reception processing such as down-conversion and A/D conversion on a data signal (e.g., PUSCH), a control signal (e.g., PUCCH including UCI such as HARQ-ACK), and a random access signal (e.g., PRACH signal) received via antenna 101 from terminal 200, and outputs the signals after the reception processing to data reception processor 104 and PRACH detector 103.

For example, PRACH detector 103 detects a Preamble signal of the PRACH and estimates the transmission timing and the reception timing based on the timing information inputted by timing control information generator 105. For example, PRACH detector 103 may perform correlation processing between the received Preamble signal of the PRACH and a replica signal of the Preamble signal generated by using a sequence number and a cyclic shift amount corresponding to the configured Preamble number.

Note that the correlation processing in PRACH detector 103 may be processing of calculating a delay profile in a time domain, or processing of calculating a delay profile by performing correlation processing (division processing) in a frequency domain and then performing an Inversed Fourier Transform (IFFT). The calculated delay profile may be used to estimate at least one of a transmission timing and a reception timing.

For example, PRACH detector 103 outputs information on at least one of the estimated transmission timing and reception timing to timing control information generator 105. For example, PRACH detector 103 may calculate a difference between the reference timing of base station 100 and the arrival timing of the received signal, and may output a calculation result to timing control information generator 105.

Further, for example, with respect to a PRACH (for example, a PDCCH order RACH) that terminal 200 has been requested (in other words, triggered) to transmit, PRACH detector 103 may detect the PRACH at a PRACH transmission timing (or a transmission occasion (for example, RO)) based on the timing calculated from the timing offset. In the present embodiment, for example, PRACH detector 103 may detect the PRACH (for example, the PDCCH order RACH) in the RO based on the timing calculated from cell-specific Koffset. For example, when PRACH detector 103 triggers terminal 200 by the PDCCH order RACH to transmit the PRACH, PRACH detector 103 may control the reception timing for the PRACH not based on the configuration of terminal-specific Koffset for terminal 200 but using cell-specific Koffset (in other words, reception based on cell-specific Koffset may be assumed).

Here, for example, when a "random access preamble index" is not designated in DCI for the PDCCH order RACH, the "Contention based RACH" in which terminal 200 randomly selects a preamble index is configured. In this instance, PRACH detector 103 may perform PRACH detection on a plurality of (for example, all) sequences configured for the cell, for example. On the other hand, for example, when the random access preamble index is designated in the DCI for the PDCCH order RACH, the "non-contention RACH" in which terminal 200 transmits the PRACH based on the designated preamble index is configured. In this situation, PRACH detector 103 may perform the PRACH detection on the designated sequence, for example.

Note that an example of PRACH transmission timing will be described later.

For example, data reception processor 104 performs demodulation and decoding processing on a received data signal such as a PUSCH or PUCCH that differs from a PRACH, based on the timing information inputted by timing control information generator 105. Further, data reception processor 104 may perform channel estimation and timing estimation based on the received data signal. Data reception processor 104 outputs information on the estimated timing to timing control information generator 105.

Here, a reception slot for the received data signal such as the PUSCH or PUCCH may be configured to, for example, a timing based on terminal-specific Koffset for terminal 200 for which terminal-specific Koffset is configured, or may be configured to a timing based on cell-specific Koffset for terminal 200 for which terminal-specific Koffset is not configured.

For example, timing control information generator 105 generates a TA command for terminal 200 based on information (for example, a timing estimation result) outputted by PRACH detector 103 and data reception processor 104. There may be a plurality of types of TA commands. In addition, timing control information generator 105 may generate a timing adjustment value common to the cells. The cell-common timing adjustment value may be generated, for example, based on at least one of the sizes of cells formed by satellite beams, the length of a feeder link, and a feeder link delay amount.

In addition, based on at least one of the altitude of the satellite and the size of the cell, timing control information generator 105 may configure cell-specific Koffset which is based on, for example, a propagation delay value corresponding to a location within the cell the farthest from a satellite. In addition, timing control information generator 105 may calculate the propagation delay amount for terminal 200 based on the information on the location of terminal 200 indicated by terminal 200 and the information on the satellite location calculated in base station 100 or a terrestrial Gateway (GW), and configure terminal-specific Koffset based on the propagation delay amount for terminal 200. Timing control information generator 105 may output timing information including information on configured Koffset to data transmission processor 107, PRACH detector 103, and data reception processor 104.

Data generator 106 generates a downlink data signal such as user data, a synchronization signal, system information (broadcast information), individual control information (for example, RRC control information), MAC control information, and downlink control information (DCI) to terminal 200. Data generator 106 outputs the generated downlink data signal to data transmission processor 107.

Data transmission processor 107 encodes and modulates the downlink data signal output by data generator 106 and the timing information output by timing control information generator 105, and outputs the modulated signal to radio transmitter 108.

Radio transmitter 108 performs transmission processing such as D/A converting, up-converting, and amplification on the signal outputted by data transmission processor 107, and transmits the radio signal after the transmission processing via antenna 101.

[Configuration of Terminal]

Next, an exemplary configuration of terminal 200 will be described.

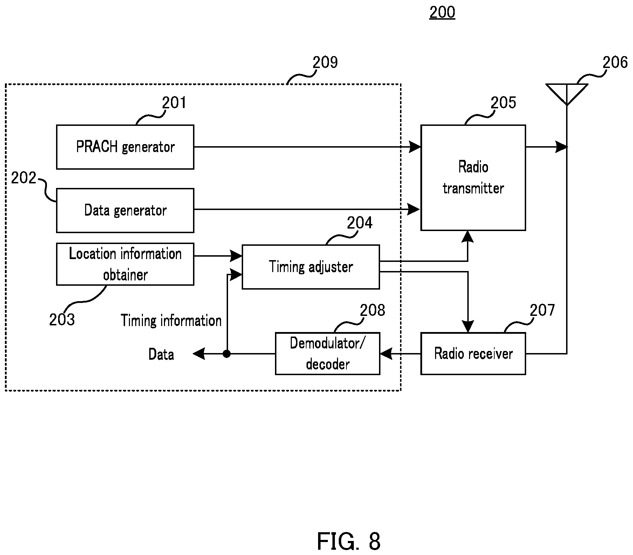

FIG. 8 is a block diagram illustrating an example of a configuration of terminal 200 according to the present embodiment. Terminal 200 includes PRACH generator 201, data generator 202, location information obtainer 203, timing adjuster 204, radio transmitter 205, antenna 206, radio receiver 207, and demodulator/decoder 208. PRACH generator 201, data generator 202, location information obtainer 203, timing adjuster 204, and demodulator/decoder 208 may be included in controller 209.

PRACH generator 201 determines PRACH transmission resources from among candidates for PRACH transmission resources available within the cell of base station 100, for example. For example, PRACH generator 201 configures time-frequency resources and a Preamble number to be used for the PRACH transmission based on information on the time-frequency resources (for example, slots and resource blocks) and a Preamble number group that are available for the PRACH transmission. For example, base station 100 may indicate the time-frequency resources and Preamble number group available for the PRACH transmission.

Here, the time-frequency resources available for PRACH transmission by terminal 200 may be referred to as RACH occasions (ROs). For example, an RO may be individually configured for an SSB. For example, during initial access, terminal 200 may select a random preamble number and transmit a PRACH in an RO corresponding to the selected SSB (e.g., an SSB with a higher reception power) at a timing at which cell search (in other words, SSB search) is completed. Further, for example, when receiving the DCI triggering the PDCCH order RACH in the RRC_CONNECTED state, terminal 200 may transmit the PRACH at a timing (RO) based on cell-specific Koffset without using terminal-specific Koffset.

Further, for example, when the DCI does not specify any preamble number, terminal 200 may select a random preamble number and transmit the PRACH in the RO corresponding to the SSB with a higher reception power. On the other hand, when DCI specifies a preamble number and SSB number, terminal 200 may transmit the PRACH with the specified preamble number in the RO corresponding to the specified SSB number.

Note that an example of RACH transmission timing will be described later.

Data generator 202 generates an uplink transmission data sequence, and generates a data signal to be transmitted using time-frequency resources for data signal transmission allocated by base station 100 and a Modulation and Coding Scheme (MCS). There are a case where the time-frequency resources and the MCS are indicated in downlink control information (DCI or PDCCH) (Dynamic grant) and a case where the time-frequency resources and the MCS are indicated by RRC signaling (Configured grant), for example. In addition, data generator 202 may generate at least one of a timing adjustment result and terminal location information described later, for example.

Location information obtainer 203 obtains, for example, the location information (information such as latitude, longitude, and altitude) on the location of terminal 200 and the location information on the location of the satellite being a communication partner. Further, location information obtainer 203 calculates the distance, for example, between terminal 200 and the satellite and outputs the calculated distance information to timing adjuster 204. The location information on terminal 200 and the satellite may be obtained by a GNSS function such as GPS, for example. Further, the location information on the satellite may be obtained, for example, by obtaining at least one of orbital information and time information called satellite ephemeris in advance.

Timing adjuster 204 adjusts reception timing of a reception signal and transmission timing of a transmission signal. For example, timing adjuster 204 adjusts the transmission timing of the transmission signal based on at least one of information indicated or broadcast by base station 100 (for example, timing information) and information calculated by timing adjuster 204.

For example, timing adjuster 204 calculates the propagation delay time of propagation between the satellite and terminal 200 from the distance information outputted by location information obtainer 203 and the radio wave propagation speed (about $3 \times 10^8$ m/s). Then, timing adjuster 204 may adjust the transmission timing based on one of the reception timing of the signal transmitted by base station 100, the calculated propagation delay time, a timing adjustment value common to the cells broadcast by base station 100, cell-specific Koffset, a timing adjustment value specific to terminal 200 indicated by base station 100 (e.g., TA value), and terminal-specific Koffset indicated by base station 100, or based on a combination thereof. The timing adjustment may be different depending on the channel and the signal to be transmitted. For example, the timing adjustment may vary depending on the PRACH, PUSCH, PUCCH, and a Sounding Reference Signal (SRS).

Radio transmitter 205 performs transmission processing such as D/A conversion and up-conversion on the signal outputted by PRACH generator 201 and the data signal outputted from data generator 202. Radio transmitter 205 transmits the radio signal after the transmission processing from antenna 206 to base station 100 at the transmission timing adjusted by timing adjuster 204.

Radio receiver 207 receives a reception signal from base station 100 via antenna 206 at the reception timing adjusted by timing adjuster 204. The reception signal may be, for example, a downlink signal such as a PDCCH and/or PDSCH. The reception signal may also include at least one of data and control information. Radio receiver 207 performs reception processing such as down-conversion and A/D conversion on the received signal, and outputs the signal after the reception processing to demodulator/decoder 208.

Demodulator/decoder 208 performs demodulation and decoding processing on the signal output by radio receiver 207. The signal outputted by radio receiver 207 may include, for example, a downlink signal such as a PDCCH and PDSCH. The PDCCH may include, for example, PDSCH allocation information and PUSCH allocation information. The PDSCH may include, for example, user data, RRC control information, MAC Control Element (CE) control information, a RACH response (e.g., MSG2), and a TA command. For example, when the demodulated and decoded information includes timing information related to transmission timing and reception timing, demodulator/decoder 208 outputs the timing information to timing adjuster 204.

[Exemplary Timing Adjustment]

Next, an exemplary configuration of transmission timing of the PDCCH order RACH according to the present embodiment will be described.

Base station 100 may calculate the longest round-trip propagation delay amount within the cell based on, for example, at least one of the altitude of the satellite, the lowest elevation angle, and the assumed cell size. Then, base station 100 may configure cell-specific Koffset based on the calculated propagation delay, and indicate configured cell-specific Koffset to terminal 200 within the cell. Cell-specific Koffset may be indicated to terminal 200 via broadcast information such as e.g., SIB1, or may be indicated to terminal 200 using another signal.

Further, for terminal 200 that has completed the initial access and is in the RRC_CONNECTED state, base station 100 may estimate the propagation delay of the round trip (e.g., RTT) between terminal 200 and base station 100 based on at least one of the information on the location of the terminal indicated by terminal 200 and the information on the propagation delay, for example. Then, base station 100 may configure terminal-specific Koffset based on the estimated propagation delay and indicate configured terminal-specific Koffset to terminal 200. Terminal-specific Koffset may be indicated to terminal 200 via at least one of RRC information, MAC CE, and DCI, for example.

Terminal 200 may transmit an uplink signal such as a PUSCH or PUCCH (e.g., HARQ-ACK) in a slot determined based on cell-specific Koffset, for example, when no terminal-specific Koffset is configured, such as when MSG3 is transmitted during initial access. Further, for example, after terminal-specific Koffset is configured, terminal 200 may transmit a PUSCH or PUCCH (e.g., HARQ-ACK) in a slot determined based on terminal-specific Koffset.

Here, radio resources (time-frequency resources) used for transmitting the PRACH are referred to as a RACH occasion (RO). Also, a slot that can be used to transmit the PRACH is referred to as a "RACH slot." For example, a plurality of RACH slots may be configured in a frame (e.g., 10 ms). In addition, one or a plurality of ROs may be configured in the RACH slot.

For example, base station 100 may indicate, to terminal 200 by a SIB or RRC signaling, a parameter (or information) related to the RACH using "RACH-ConfigCommon," which is one RRC parameter.

For example, a parameter relating to the configuration of the RACH slot or of the RO in the RACH slot may be indicated by "prach-ConfigurationIndex" in RACH-ConfigCommon. Also, for example, the association between the SSB and RO may be indicated by "ssb-perRACH-OccasionAndCB-PreamblesPerSSB" in RACH-ConfigCommon.

In addition, for example, base station 100 may trigger terminal 200 to perform the PRACH transmission when the downlink transmission data occurs for terminal 200 in the RRC_CONNECTED state after the expiration of TA timer or when communication has not been performed for a certain period and the synchronization state of terminal 200 is not identified. Triggering the PRACH transmission may be indicated to terminal 200 by DCI for the PDCCH order RACH, for example. In NR Rel. 15, for example, this triggering the PDCCH order RACH is meant when a particular field (e.g., resource allocation) in DCI has a particular bit string (e.g., all 0). Note that triggering the PRACH transmission is not limited to this, and may be performed in a different method from that in NR Rel. 15.

The DCI for the PDCCH order RACH may, for example, indicate the following information described in TS38.212:

- Random Access Preamble index - 6 bits according to ra-PreambleIndex
- UL/SUL indicator - 1 bit. If the value of the "Random Access Preamble index" is not all zeros and if the UE is configured with supplementaryUplink in ServingCellConfig in the cell, this field indicates which UL carrier in the cell to transmit the PRACH; otherwise, this field is reserved
- SS/PBCH index - 6 bits. If the value of the "Random Access Preamble index" is not all zeros, this field indicates the SS/PBCH that shall be used to determine the RACH occasion for the PRACH transmission; otherwise, this field is reserved.
- PRACH Mask index - 4 bits. If the value of the "Random Access Preamble index" is not all zeros, this field indicates the RACH occasion associated with the SS/PBCH indicated by "SS/PBCH index" for the PRACH transmission; otherwise, this field is reserved
- Reserved bits - 10 bits.

Base station 100 may indicate a sequence of the PDCCH order RACH, for example, by specifying a Random Access Preamble index (e.g., a Preamble number) different from 0. In addition, when indicating the sequence of the PDCCH order RACH, base station 100 may designate an RO by using an SS/PBCH index (for example, an SSB number) and a PRACH Mask index (for example, a PRACH mask number). In this way, base station 100 may designate the PRACH resource in which terminal 200 performs a transmission.

Alternatively, base station 100 may indicate Contention (contention)-based RACH transmission by specifying 0 as the Random Access Preamble index. Terminal 200 may then select a random preamble sequence and transmit the PRACH, for example, in an RO associated with an SSB of a higher reception power.

In the present embodiment, base station 100 may configure cell-specific Koffset and terminal-specific Koffset for terminal 200. Terminal 200 may, for example, determine the transmission timing (e.g., RO) for the PUSCH or HARQ-ACK based on terminal-specific Koffset. Meanwhile, terminal 200 may determine, based on cell-specific Koffset, a transmission timing for the PDCCH order RACH that is to be used for the PRACH transmission. In other words, when the PDCCH from base station 100 triggers the PRACH transmission, terminal 200 may determine the transmission timing (e.g., RO) of the PRACH (e.g., PDCCH order RACH) using cell-specific Koffset without using terminal-specific Koffset.

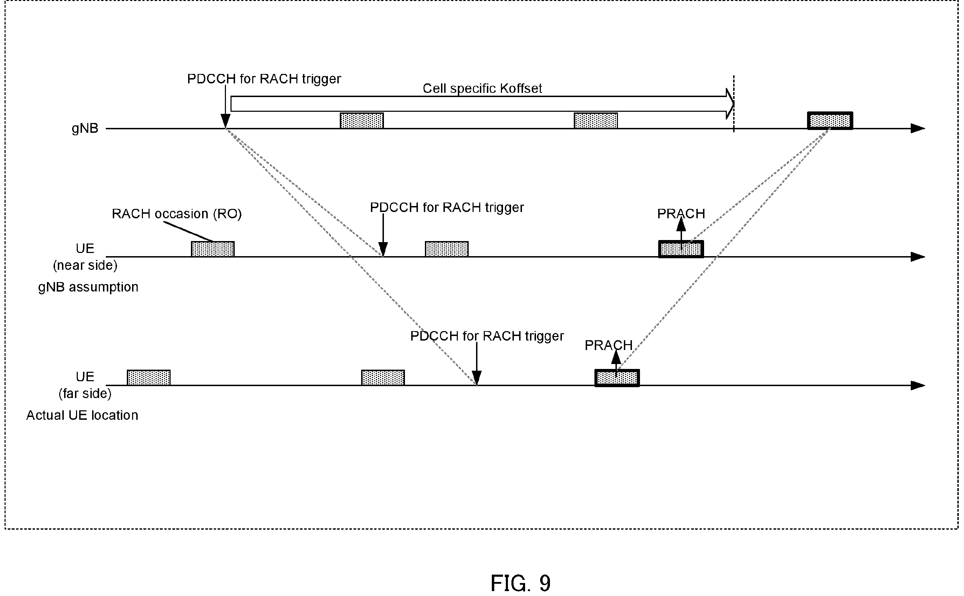

FIG. 9 is a diagram illustrating an exemplary configuration of the RO for the PDCCH order RACH according to the present embodiment.

In FIG. 9, base station 100 expects (e.g., waits) to receive a RACH at a timing based on cell-specific Koffset from a transmission timing of a PDCCH (e.g., a PDCCH for RACH trigger) that triggers the RACH.

For example, when terminal 200 receives DCI for the PDCCH order RACH (e.g., a PDCCH for RACH trigger), it determines the RO based on cell-specific Koffset regardless of the configuration of terminal-specific Koffset, and transmits the PRACH in the determined RO. For example, terminal 200 may transmit the PRACH in an RO at or after the slot specified by cell-specific Koffset.

Here, for example, as illustrated in FIG. 9, also when the actual location of terminal 200 differs from the location corresponding to terminal-specific Koffset (for example, the propagation delay specific to terminal 200) configured for terminal 200, base station 100 and terminal 200 transmit the RACH based on cell-specific Koffset. In other words, base station 100 and terminal 200 determine the RO based on, for example, a timing offset based on an RTT for a location where a propagation delay between the satellite (or base station 100) and terminal 200 is the largest in the cell. Therefore, the timing of the PRACH transmission can be recognized consistently between base station 100 and terminal 200 without based on the actual location of terminal 200 in the cell. Also, the use of cell-specific Koffset ensures that terminal 200 can transmit the PRACH in the RO specified by base station 100, independently of the location of terminal 200 in the cell (in other words, propagation delay).

Here, there are cases where a plurality of ROs are configured, such as in a case where a plurality of SSBs (e.g., beams) are used. In the following, determination methods 1 and 2 will be described as exemplary methods for determining a PRACH transmission timing based on cell-specific Koffset.

<Determination Method 1>

In determination method 1, base station 100 may receive a PRACH in the first RO (e.g., the earliest RO) among ROs corresponding to at least one of the SSBs and the preamble numbers selected for terminal 200, which RO is the first after a slot at a timing obtained by adding cell-specific Koffset to a transmission slot for a PDCCH for RACH trigger (e.g., a slot delayed by cell-specific Koffset), for example. Similarly, terminal 200 may transmit a PRACH in the first RO (e.g., the earliest RO) among the ROs corresponding to at least one of the selected SSBs and preamble numbers, which RO is the first after a timing based on a reception slot for the PDCCH for RACH trigger and cell-specific Koffset, for example.

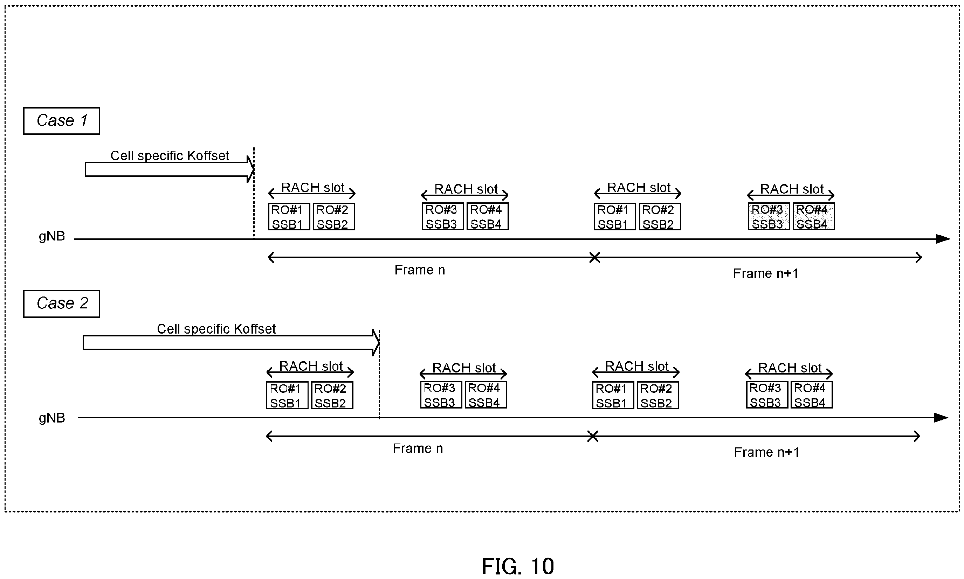

FIG. 10 is a diagram illustrating an exemplary relationship between cell-specific Koffset and ROs when a plurality of ROs corresponding to a plurality of SSBs are configured.

For example, when a plurality of SSBs corresponding respectively to a plurality of ROs are configured, there are cases regarding the relationship between cell-specific Koffset and the ROs: a case (hereinafter referred to as "Case 1") where a slot specified by Koffset is configured prior to the first RO (RO #1 in FIG. 10) of the first SSB (for example, SSB with the smallest index; SSB 1 in FIG. 10) and a case (hereinafter referred to as "Case 2") where a slot specified by Koffset is configured after the first RO of the first SSB (for example, SSB with the smallest index) and before the last RO of the last SSB (for example, SSB with the largest index) from among the plurality of SSBs. For example, in case 2 of FIG. 10, the slot specified by cell-specific Koffset is configured after first RO #1 of first SSB 1 and before last RO #4 of last SSB 4 (between RO #2 and RO #3 in FIG. 10).

By way of example, when SSB 3 corresponding RO #3 is configured for terminal 200, terminal 200 transmits the PRACH at a timing corresponding to earlier RO #3 (RO #3 corresponding to SSB 3 in frame n) subsequent to the timing specified by Koffset illustrated in FIG. 10 in both cases 1 and 2. In addition, base station 100 similarly receives (for example, expects to receive) the PRACH in RO #3 corresponding to SSB 3 of in frame n illustrated in FIG. 10.

As is understood, in determination method 1, terminal 200 may select the earliest RO from among the ROs subsequent to the timing based on cell-specific Koffset (for example, from among the ROs configured for terminal 200). Accordingly, terminal 200 can transmit the PRACH at the earliest timing after the timing specified by Koffset, and thus can reduce the delay lasting until the PRACH transmission.

<Determination Method 2>

In determination method 2, base station 100 may, for example, receive a PRACH in an RO corresponding to at least one of the SSBs and preamble numbers selected for terminal 200, which RO is determined such that the first RO (RO #1 in FIG. 10) of the first SSB (e.g., an SSB with the smallest index; SSB 1 in FIG. 10) is after a slot at a timing defined by a transmission slot for a PDCCH for RACH trigger and cell-specific Koffset (e.g., a slot delayed by cell-specific Koffset from the slot for transmission of the PDCCH for RACH trigger). Similarly, terminal 200 may transmit the PRACH, for example, in an RO corresponding to at least one of the selected SSBs and preamble numbers, which RO is determined such that the first RO (in other words, the leading RO) of the first SSB is after the timing based on the reception slot for the PDCCH for RACH trigger and cell-specific Koffset.

By way of example, a case will be described in which RO #3 corresponding to SSB 3 is configured for terminal 200.

For example, in case 1 of FIG. 10, RO #1 (for example, the first RO) corresponding to SSB 1 in frame n is configured subsequent to the timing specified by Koffset. Thus, terminal 200 transmits the PRACH in RO #3 in frame n.

On the other hand, in case 2 of FIG. 10, RO #1 (for example, the first RO) corresponding to SSB 1 in frame n is configured prior to the timing specified by Koffset, and RO #1 (for example, the first RO) corresponding to SSB 1 in frame n+1 is configured subsequent to the timing specified by Koffset. Therefore, terminal 200 does not transmit the PRACH in RO #3 in frame n, but transmits the PRACH in RO #3 in frame n+1 at which RO #1 corresponding to SSB 1 is later than the timing specified by Koffset.

Thus, in determination method 2, terminal 200 selects an RO (RO #3 in frame n+1 in case 2 of FIG. 10) included in the earliest set of ROs among the sets of ROs (for example, the sets including RO #1 to RO #4 in FIG. 10), which set is later than the timing based on cell-specific Koffset. Thus, terminal 200 controls the PRACH transmission per identical RO set (RO #1 to RO #4 in FIG. 10) independently of the timing relation between the timing specified by cell-specific Koffset and the ROs. Thus, the PRACH timing management is facilitated.

The exemplary determination methods for determining the PRACH transmission timing based on cell-specific Koffset have been described above.

As described above, in the present embodiment, terminal 200 determines the RO for PRACH transmission using one of cell-specific Koffset and terminal-specific Koffset (for example, a parameter different from the cell-specific offset) based on a control signal (for example, PDCCH) related to uplink transmission. For example, terminal 200 may determine the RO using cell-specific Koffset when triggered by the PDCCH to transmit the PRACH. Similarly, when base station 100 triggers the PRACH transmission by the PDCCH, the RO for PRACH transmission may be determined using cell-specific Koffset without using terminal-specific Koffset.

By using cell-specific Koffset, the RO for PRACH transmission is determined independently of the location of terminal 200. It is thus possible to suppress inconsistency in recognition of the timing of the PRACH between base station 100 and terminal 200. For example, any of terminals 200 located in the cell of base station 100 can transmit the PRACH at the timing based on cell-specific Koffset.

Further, for example, even when terminal 200 exists at a location farther from the satellite than the location assumed by base station 100, it is possible to avoid a case where terminal 200 misses the PRACH transmission in the RO designated by base station 100 and the PRACH transmission can be ensured.

Further, for example, in the present embodiment, base station 100 identifies the timing (for example, RACH slot or RO) at which terminal 200 transmits the PRACH. It is thus not necessary for base station 100 to perform blind reception of the PRACH, and the process of base station 100 can be simplified.

Therefore, according to the present embodiment, it is possible to achieve appropriate timing control depending on a propagation delay between base station 100 and terminal 200.

Note that the present embodiment has been described in relation to an example in which cell-specific Koffset and terminal-specific Koffset are indicated to terminal 200, but the present invention is not limited thereto. For example, cell-specific Koffset may be indicated to terminal 200, and a difference (e.g., "$\Delta K$") from cell-specific Koffset may further be indicated to terminal 200. In this case, terminal-specific Koffset may be set to cell-specific Koffset + $\Delta K$. The indication of the timing offset to terminal 200 may be indicated by at least one of RRC signaling, MAC CE, and DCI, for example.

In addition, when the PRACH transmission is triggered by the PDCCH (i.e., when DCI for the PDCCH order RACH is received), the synchronization state is considered to be uncertain. Thus, terminal 200 may discard already-held terminal-specific Koffset and use cell-specific Koffset for subsequent communication (e.g., PDSCH reception, PUSCH transmission, PUCCH transmission, or the like) including PRACH transmission until terminal-specific Koffset is newly configured.

(Embodiment 2)

The configuration of the base station and the terminal according to the present embodiment may be the same as the configuration of base station 100 and terminal 200 described in Embodiment 1.

In the present embodiment, for example, when a PDCCH triggers PRACH transmission, base station 100 and terminal 200 control the transmission timing and the reception timing of the PRACH based on the information regarding the transmission occasion (for example, RO) of the PRACH.

For example, base station 100 may indicate, to terminal 200, the RO used for the PRACH transmission by the DCI (e.g., the PDCCH for RACH trigger) that triggers the RACH. For example, when receiving the DCI triggering the RACH, terminal 200 may determine the RO based on information on the RO included in the DCI and transmit the PRACH in the determined RO.

The information on the RO (hereinafter, referred to as "RO information") may include, for example, information indicating use of one of a cell-specific offset and a parameter different from the cell-specific offset (for example, terminal-specific Koffset described later or a "next available RO").

The RO information will be described below.

<Example 1 of RO Information>

The RO information may, for example, indicate the type of Koffset used to determine the RO. For example, the RO information may include information indicating use of any one of cell-specific Koffset and terminal-specific Koffset (e.g., an exemplary parameter that differs from cell-specific Koffset).

Base station 100 may, for example, indicate the RO information indicating the use of terminal-specific Koffset to terminal 200 whose synchronization state or location is specified. On the other hand, base station 100 may, for example, indicate the RO information indicating the use of cell-specific Koffset to terminal 200 whose synchronization state or location is not specified, or terminal 200 whose synchronization state or location is uncertain.

Accordingly, for terminal 200 whose synchronization state (or location) is identified by base station 100, it is possible to perform appropriate timing control for terminal 200 by configuring the timing of PRACH transmission based on terminal-specific Koffset. It is thus possible to reduce a delay in PRACH transmission. In addition, for terminal 200 whose synchronization state (or location) is unknown or uncertain to base station 100, configuring the timing of PRACH transmission based on cell-specific Koffset makes it possible to designate the RO in which it is ensured that terminal 200 can perform transmission, independently of the state of terminal 200 in the cell.

<Example 2 of RO Information>

Regarding the RO determination, the RO information may include, for example, information indicating the use of any one of cell-specific Koffset and an RO (e.g., "next available RO") available for terminal 200 (e.g., an exemplary parameter that differs from cell-specific Koffset).

Base station 100 may, for example, indicate the RO information indicating the use of the "next available RO" to terminal 200 whose synchronization state or location is specified. On the other hand, base station 100 may, for example, indicate the RO information indicating the use of cell-specific Koffset to terminal 200 whose synchronization state or location is not specified, or terminal 200 whose synchronization state or location is uncertain.

Accordingly, configuring the "next available RO" allows terminal 200 whose synchronization state (or location) is identified by base station 100 to transmit the PRACH at an earlier timing. It is thus possible to reduce a delay in PRACH transmission. In addition, for terminal 200 whose synchronization state (or location) is unknown or uncertain to base station 100, configuring the timing of PRACH transmission based on cell-specific Koffset makes it possible to designate the RO in which it is ensured that terminal 200 can perform transmission, independently of the state of terminal 200 in the cell.

The exemplary RO information has been described above.

The RO information may also be configured as follows.

For example, base station 100 may indicate, to terminal 200 whose synchronization state or location is specified, a non-contention based RACH (for example, at least one of an SSB number and preamble number) and the use of terminal-specific Koffset by the RO information.

On the other hand, base station 100 may, for example, indicate the contention based RACH and the use of the "next available RO" by the RO information to terminal 200 whose synchronization state or location is not specified or terminal 200 whose synchronization state or location is uncertain. In the indication of the contention based RACH, for example, base station 100 does not have to indicate the SSB number and preamble number. Further, not indicating the SSB number and preamble number may be achieved by, for example, indicating a Random Access Preamble index or ra-PreambleIndex = 0.

In addition, base station 100 may indicate, for example, the RO information indicating the use of any one of cell-specific Koffset, terminal-specific Koffset, and the "next available RO" to terminal 200.

Next, an indication method for indicating the RO information will be described.

<Indication Method 1>

In NR Rel. 15, for example, DCI format 1_0 that schedules the PDSCH is used as the DCI indicating the PDCCH order RACH. The number of bits used for the DCI indicating the PDCCH order RACH is smaller than the number of bits used for scheduling the PDSCH. For this reason, a larger number of reserved bits may be configured for DCI format 1_0 indicating the PDCCH order RACH as compared with scheduling the PDSCH.

Therefore, in indication method 1, the RO information may be indicated using, for example, a part of reserved bits of DCI format 1_0 indicating the PDCCH order RACH.

In indication method 1, the RO information is indicated using individual bits. Thus, the flexibility in configuration by base station 100 is improved. In addition, the RO information is indicated using a part of the reserved bits of DCI format 1_0. It is thus possible to suppress an increase in the total number of bits of the DCI.

Note that the RO information is not limited to DCI format 1_0, and may also be indicated by, for example, other existing channels or control information (for example, reserved bits).

<Indication Method 2>

In NR Rel. 15, one of the contention based RACH and non-contention based RACH is indicated in the DCI indicating the PDCCH order RACH.

For example, when the Random Access Preamble index (or *ra-PreambleIndex*) is 0 (all zeros; for example, 0b000000), it corresponds to the contention based RACH, and terminal 200 randomly selects a preamble sequence from among ROs corresponding to an SSB selected by terminal 200 and transmits the PRACH.

On the other hand, when the Random Access Preamble index (or *ra-PreambleIndex*) is not 0 (not all zeros (0b000000)), it corresponds to the non-contention based RACH, and terminal 200 transmits the PRACH in an RO specified by the PRACH Mask index from among ROs corresponding to an SSB specified by an SS/PBCH index and using a preamble sequence with a preamble number specified by the Random Access Preamble index.

In indication method 2, base station 100 may implicitly indicate the RO information to terminal 200, for example, depending on which of the contention based RACH or the non-contention based RACH is used. For example, base station 100 and terminal 200 may determine the RO information according to whether or not the Random Access Preamble index is 0 (all zeros, for example, 0b000000).

For example, in the case of <Example 1 of RO Information> described above, terminal 200 may determine the RO using cell-specific Koffset when the Random Access Preamble index is 0 (for example, in the case of the contention based RACH), and may determine the RO using terminal-specific Koffset when the Random Access Preamble index is not 0 (for example, in the case of the non-contention based RACH).

In other words, the RO information may include any one of information associated with cell-specific Koffset (for example, information indicating the contention based RACH) and information associated with terminal-specific Koffset (for example, information indicating the non-contention based RACH).

For example, base station 100 may set the Random Access Preamble index to a value other than 0 for terminal 200 whose synchronization state or location is specified, and indicated the SSB, RO, and preamble number to terminal 200. At this time, for example, base station 100 identifies the possibility for terminal 200 to perform PRACH transmission based on terminal-specific Koffset configured for terminal 200, and may thus determine the timing of the RO according to terminal-specific Koffset. In addition, terminal 200 may identify that the use of terminal-specific Koffset has been implicitly indicates, for example, since the Random Access Preamble index has a value different from 0.

On the other hand, base station 100 may set the Random Access Preamble index to 0, for example, for terminal 200 whose synchronization state or location is not specified, or terminal 200 whose synchronization state or location is uncertain, and trigger the contention based RACH for terminal 200. At this time, for example, base station 100 does not identify whether or not terminal 200 can perform PRACH transmission based on terminal-specific Koffset configured for terminal 200, and may thus determine the timing of the RO according to cell-specific Koffset. Also, terminal 200 may identify that the use of cell-specific Koffset has been implicitly indicated, for example, since the Random Access Preamble index is 0.

As another example, in the case of <Example 2 of RO Information> described above, terminal 200 may determine the RO using cell-specific Koffset when the Random Access Preamble index is 0 (for example, contention based RACH), and may determine the RO using the "next available RO" when the Random Access Preamble index is not 0 (for example, non-contention based RACH).

In other words, the RO information may include any one of information associated with cell-specific Koffset (for example, information indicating the contention based RACH) and information associated with the "next available RO" (for example, information indicating the non-contention based RACH).

For example, base station 100 may set the Random Access Preamble index to a value different from 0 for terminal 200 whose synchronization state or location is specified, and indicate the SSB, RO, and preamble number as the non-contention based RACH to terminal 200. At this time, base station 100 identifies that terminal 200 can perform PRACH transmission based on the timing based on the "next available RO," and may thus determine the timing of the RO based on the "next available RO," for example. Also, terminal 200 may identify that the use of "next available RO" has been implicitly indicated, for example, since the Random Access Preamble index has a value different from 0.

On the other hand, base station 100 may set the Random Access Preamble index to 0, for example, for terminal 200 whose synchronization state or location is not specified, or terminal 200 whose synchronization state or location is uncertain, and trigger the contention based RACH for terminal 200. At this time, base station 100 does not identify the "next available RO" for terminal 200, for example, and may thus determine the timing of the RO based on cell-specific Koffset. Also, terminal 200 may identify that the use of cell-specific Koffset has been implicitly indicated, for example, since the Random Access Preamble index is 0.

In the case of the non-contention based RACH, base station 100 receives the PRACH with the SSB and preamble number designated to terminal 200. It is thus possible to reduce a delay in PRACH transmission by designating the RO based on the "next available RO" to terminal 200. In addition, base station 100 can expect to receive the PRACH with the SSB and preamble number designated to terminal 200. It is thus possible to prevent blind decoding in base station 100.

In addition, in the case of the Contention based RACH, base station 100 indicates the use of cell-specific Koffset to terminal 200 to which the PDCCH order RACH is indicated, and waits for the PRACH to be transmitted by non-initial-access terminal 200. Since a PRACH reception timing in base station 100 is known, blind decoding can be avoided.

As another example, in the case of <Example 2 of RO Information> described above, terminal 200 may determine the RO using the "next available RO" when the Random Access Preamble index is 0 (for example, contention based RACH), and may determine the RO using terminal-specific Koffset when the Random Access Preamble index is not 0 (for example, non-contention based RACH).

In other words, the RO information may include any one of information associated with the "next available RO" (e.g., information indicating the contention based RACH) and information associated with terminal-specific Koffset (e.g., information indicating non-contention based RACH).

For example, base station 100 may set the Random Access Preamble index to a value different from 0 for terminal 200 whose synchronization state or location is specified, and indicate the SSB, RO, and preamble number as the non-contention based RACH to terminal 200. At this time, for example, base station 100 identifies the possibility for terminal 200 to perform PRACH transmission based on terminal-specific Koffset, and may thus determine the timing of the RO according to terminal-specific Koffset. In addition, terminal 200 may identify that the use of terminal-specific Koffset has been implicitly indicated, for example, since the Random Access Preamble index has a value different from 0.

On the other hand, base station 100 may set the Random Access Preamble index to 0, for example, for terminal 200 whose synchronization state or location is not specified, or terminal 200 whose synchronization state or location is uncertain, and trigger the contention based RACH for terminal 200. At this time, base station 100 may determine the timing of the RO based on, for example, the "next available RO" for terminal 200. Also, terminal 200 may identify that the use of "next available RO" has been implicitly indicated, for example, since the Random Access Preamble index is 0.

In the case of the non-contention based RACH, base station 100 receives the PRACH with the SSB and preamble number designated to terminal 200. It is thus possible to reduce a delay in PRACH transmission by designating the RO based on terminal-specific Koffset to terminal 200. In addition, base station 100 can expect to receive the PRACH with the SSB and preamble number designated to terminal 200. It is thus possible to prevent blind decoding in base station 100.

In addition, in the case of the Contention based RACH, for example, base station 100 performs blind decoding for initial-access terminal 200, because there is a possibility that terminal 200 uses PRACH resources for which terminal 200 and the terminal performing the initial access contend. Therefore, base station 100 indicates the use of "next available RO" also to terminal 200 to which the PDCCH order RACH is indicated, and waits for the PRACH to be transmitted by non-initial-access terminal 200. Base station 100 performs blind decoding since the RO, SSB, and Preamble number selected by terminal 200 are unknown. Since base station 100 performs blind decoding the same as that performed on the PRACH transmitted by initial-access terminal 200, there is no additional complicated processing. On the other hand, terminal 200 performs the same terminal operation as in the initial access, and it is thus possible to simplify terminal 200.

In indication method 2, the information related to the RO is implicitly indicated to terminal 200. It is thus possible to suppress an increase in the amount of information in the indication of RO information. Further, for example, when base station 100 implicitly indicates the RO information to terminal 200 based on a value of the Random Access Preamble index, base station 100 can appropriately indicate the RACH type (for example, any one of the contention based RACH and non-contention based RACH) and the RO timing depending on the condition of grasping the state of terminal 200 by base station 100.

The exemplary indication methods for indicating the RO information have been described above.

As described above, in the present embodiment, terminal 200 determines the RO for PRACH transmission based on the control signal (for example, RO information) related to the uplink transmission and by using one of cell-specific Koffset and the parameter different from cell-specific Koffset (for example, terminal-specific Koffset or the "next available RO"). Similarly, base station 100 determines the RO for PRACH reception based on the control signal (e.g., RO information) related to the uplink reception and by using one of cell-specific Koffset and the parameter different from cell-specific Koffset (e.g., terminal-specific Koffset or the "next available RO").

By the indication of information on the RO, base station 100 can appropriately control the PRACH transmission timing depending on, for example, the recognition condition of terminal 200. Therefore, according to the present embodiment, it is possible to achieve appropriate timing control depending on a propagation delay between base station 100 and terminal 200.

The present embodiment has been described in relation to an example in which the information on the RO used for PRACH transmission is indicated to terminal 200 by the DCI (e.g., PDCCH for RACH trigger) triggering the RACH, but the information on the RO is not limited to the DCI, and may also be indicated to (or configured for) terminal 200 by another signal (e.g., SIB, RRC signaling, or MAC CE). Further, the present invention is not limited to the above-described indication methods for indicating the RO information, and for example, information related to the RO may be indicated using bits added to the DCI.

In addition, when the PDCCH triggers the PRACH transmission by terminal 200 (that is, when the DCI for the PDCCH order RACH is received) and terminal 200 transmits the PRACH in the RO determined based on cell-specific Koffset, the synchronization state is considered to be uncertain. Therefore, terminal 200 may discard already held terminal-specific Koffset and may use cell-specific Koffset for subsequent communication (for example, PDSCH reception, PUSCH transmission, PUCCH transmission, or the like) until terminal-specific Koffset is newly configured. In addition, when terminal 200 transmits the PRACH in the RO determined based on any of the parameters different from cell-specific Koffset (for example, terminal-specific Koffset or the "next available RO"), it is considered that the synchronization state is maintained, and therefore, terminal-specific Koffset held may be used for subsequent communication (for example, PDSCH reception, PUSCH transmission, PUCCH transmission, or the like).

(Embodiment3)

The configurations of the terminal and the base station according to the present embodiment may be the same as the configurations of base station 100 and terminal 200 described in Embodiment 1.

In the present embodiment, for example, methods for determining the RO to be used for the PDCCH order RACH based on another offset different from Koffset (e.g., cell-specific Koffset and terminal-specific Koffset) will be described.

For example, information relevant to the offset may be indicated to terminal 200 by the RRC signaling, or the information may be included in the PDCCH for RACH trigger and indicated to terminal 200.

A configuration method for configuring an offset according to the present embodiment will be described below.

<Configuration Method 1>

In configuration method 1, the term "offset" means, for example, the number of slots from a transmission slot for the PDCCH (e.g., the PDCCH for RACH trigger) triggering RACH. In other words, the offset in configuration method 1 is an offset in units of slots.

For example, when the offset value is N, terminal 200 may transmit the PRACH in an RO corresponding to the timing at or after the slot later by N slots than the slot in which base station 100 transmits the PDCCH.

Further, for example, when the SSB and preamble number are indicated by base station 100 to terminal 200, terminal 200 may transmit the PRACH in an RO corresponding to the indicated SSB, and when the SSB and preamble number are not indicated by base station 100 to terminal 200, terminal 200 may transmit the PRACH in an RO corresponding to an SSB selected by terminal 200.

<Configuration Method 2>

In configuration method 2, the term "offset" means, for example, the number of RACH slots from the transmission slot for the PDCCH (e.g., the PDCCH for RACH trigger) triggering RACH. In other words, the offset in configuration method 2 is an offset in units of RACH slot including the RO (transmission occasion) for the PRACH.

For example, when the offset value is N, terminal 200 may transmit the PRACH in an RO in the N-th RACH slot (or an RO at or after an RO in the N-th RACH slot) among RACH slots configured for the corresponding cell, the N-th RACH slot being a RACH slot at or after the slot in which base station 100 transmits the PDCCH. The RACH slots configured for the cell may be indicated, for example, by RACH-ConfigCommon of an RRC parameter.

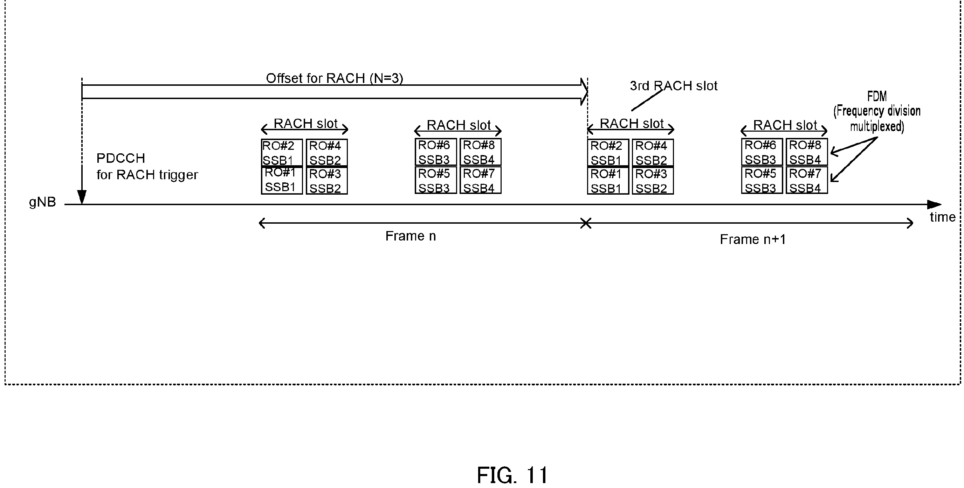

FIG. 11 is a diagram illustrating an exemplary configuration of ROs in configuration method 2. FIG. 11 illustrates an example in which N = 3. As illustrated in FIG. 11, terminal 200 may transmit the PRACH in an RO (e.g., any of RO #1 to RO #4) in the third RACH slot after the slot in which base station 100 transmits the PDCCH for RACH trigger.

Further, for example, when the SSB, RO and preamble number are indicated by base station 100, terminal 200 may transmit the PRACH in the designated RO of the indicated SSB. Further, for example, when the SSB, RO and preamble number are not indicated by base station 100, terminal 200 may randomly select an RO and preamble from among the ROs and preambles corresponding to an SSB selected by terminal 200 and may transmit the PRACH.

In configuration method 2, the offset in units of RACH slot is indicated. It is thus possible to reduce the number of bits for expressing the offset, for example, as compared with configuration method 1 (indication in units of slot), so as to reduce the amount of offset signaling.

<Configuration Method 3>

In configuration method 3, the term "offset" means, for example, the number of ROs from a transmission slot for the PDCCH (e.g., the PDCCH for RACH trigger) triggering RACH. In other words, the offset in configuration method 3 is an offset in units of RO (transmission occasion) for the PRACH.

For example, when the offset value is N, terminal 200 may transmit the PRACH in an RO in the N-th RO (or in an RO after the N-th RO) among ROs configured for the corresponding cell, the N-th RO being an RO at or after the slot in which base station 100 transmits the PDCCH. The ROs configured for the cell may be indicated, for example, by RACH-ConfigCommon of an RRC parameter.

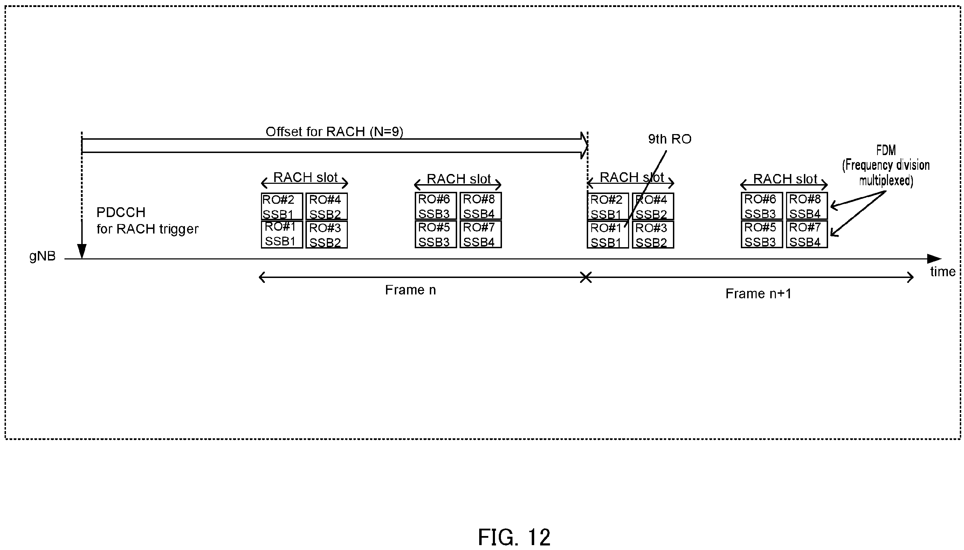

FIG. 12 is a diagram illustrating an exemplary configuration of ROs in configuration method 3. FIG. 12 illustrates an example in which N = 9. As illustrated in FIG. 12, terminal 200 may transmit the PRACH in the ninth RO (e.g., RO #1) after the slot in which base station 100 transmits the PDCCH for RACH trigger.

Note that, among a plurality of ROs at the same timing (for example, the same slot), the ROs may be counted in increasing order of frequency when the ROs are Frequency Division Multiplexed (FDMed) as illustrated in FIG. 12. Note that RO counting method is not limited to that performed in increasing order of frequency, and may be, for example, performed in decreasing order of frequency, or may be performed in a defined order irrespective of the frequencies.

Further, for example, when the SSB, RO and preamble number are indicated by the base station, terminal 200 may transmit the PRACH in the designated RO of the indicated SSB. Further, for example, when the SSB, RO and preamble number are not indicated by base station 100, terminal 200 may randomly select an RO and preamble from among the ROs and preambles corresponding to an SSB selected by terminal 200 and may transmit the PRACH.

In configuration method 3, the offset in units of RO is indicated. It is thus possible to reduce the number of bits for expressing the offset, for example, as compared with configuration method 1 (indication in units of slot), so as to reduce the amount of offset signaling. Further, in configuration method 3, for example, even when the ROs are frequency-division multiplexed, base station 100 can appropriately designate, to terminal 200, an RO from among the ROs frequency-division multiplexed.

<Configuration Method 4>

In configuration method 4, the term "offset" means, for example, an offset from cell-specific Koffset or terminal-specific Koffset. For example, terminal 200 may transmit the PRACH in an RO at or after a slot obtained by adding the number of slots indicated by the indicated offset to cell-specific Koffset or terminal-specific Koffset. Note that the offset may include zero or may be a negative value.

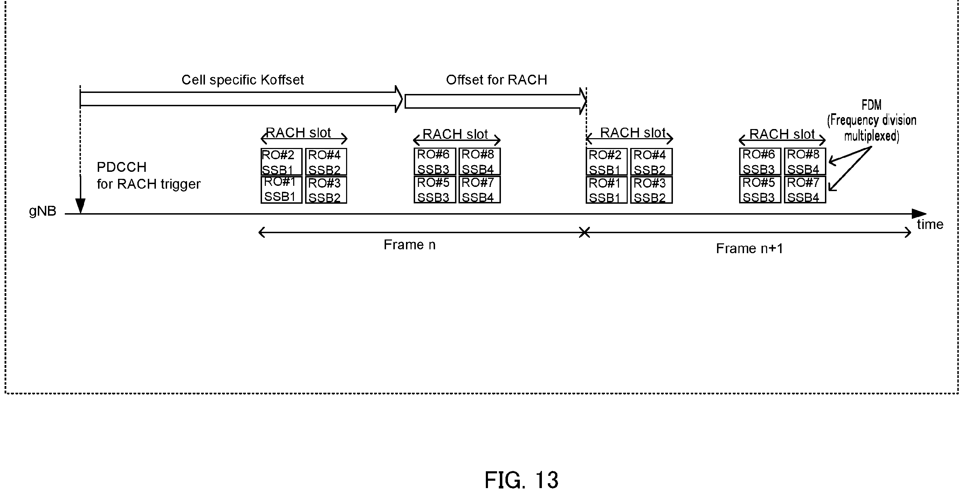

By way of example, FIG. 13 illustrates an example in which an offset (e.g., Offset for RACH) from cell-specific Koffset is indicated. Terminal 200 may transmit the PRACH in an RO (for example, an RO in or after Frame #n+1) at or after a slot shifted by cell-specific Koffset and by the indicated Offset for RACH from the slot in which base station 100 has transmitted the PDCCH for RACH trigger (for example, the PDCCH for RACH trigger).

For example, base station 100 may designate an offset taking into account the time to be taken for at least one of PDCCH reception, a decoding process, and a PRACH generation process at terminal 200. By designating the offset, for example, it is possible to avoid a case in which the process of terminal 200 is not in time for a designated PRACH transmission timing, and it is ensured that terminal 200 can transmit the PRACH. In addition, indication as an offset from cell-specific Koffset or terminal-specific Koffset makes it possible to reduce the number of indication bits and a control overhead as compared with the case in which the offset from the PDCCH transmission slot is configured.

Base station 100 may select, as the offset, a parameter from among the candidates including a parameter (for example, K2 of PUSCH-TimeDomainResourceAllocationList) used for time-resource allocation of a PUSCH or a parameter (for example, dl-DataToUL-ACK of PUCCH-Config) for controlling a HARQ-ACK transmission timing, and indicate the selected parameter to terminal 200. For example, the range defined in the 3GPP specification (e.g., TS38.331) may be used as the candidates for the offset, or one or more values configured by base station 100 for terminal 200 may be used as the candidates for the offset. It is thus possible to further reduce the number of indication bits since possible values for the offset is limited.

Alternatively, base station 100 may select, as the offset, any of the parameters (e.g., K2 of PUSCH-TimeDomainResourceAllocationList) e.g., used for the time-resource allocation of a PUSCH or the parameters (e.g., dl-DataToUL-ACK of PUCCH-Config) for controlling a HARQ-ACK transmission timing. The selected value may be, for example, a minimum value, a median value, a maximum value, or an initial (or last) value among values defined in the 3GPP specification (for example, TS38.331), or a minimum value, a median value, a maximum value, or an initial (or last) value among one or more values configured by base station 100 for terminal 200. In this case, base station 100 does not need to separately indicate the offset to terminal 200, and terminal 200 can obtain the offset for the PDCCH order RACH from the configured parameters.

The exemplary configuration methods for configuring the offset have been described above.

In the present embodiment, when triggering the PDCCH order RACH to terminal 200, base station 100 designates the PRACH transmission timing based on an offset different from each of cell-specific Koffset and terminal-specific Koffset. Thus, base station 100 and terminal 200 can determine the timing of the PDCCH order RACH independently of, for example, the situation (for example, synchronization state or location) of terminal 200. It is thus possible to suppress inconsistency in recognition of the PRACH transmission timing between base station 100 and terminal 200. In addition, since base station 100 can identify the PRACH transmission timing based on the offset, it is not necessary to perform blind decoding for the PRACH, and the process of base station 100 can be simplified.

Further, for example, appropriate specific configuration of the offset for terminal 200 by base station 100 makes it possible to avoid a case in which the process of terminal 200 is not in time for the PRACH transmission timing indicated by base station 100, and it is ensured that terminal 200 can transmit the PRACH.

In addition, when the PRACH transmission is triggered by the PDCCH (i.e., when DCI for the PDCCH order RACH is received), the synchronization state is considered to be uncertain. Thus, terminal 200 may discard already-held terminal-specific Koffset and use cell-specific Koffset for subsequent communication (e.g., b, PDSCH reception, PUSCH transmission, PUCCH transmission, or the like) including PRACH transmission until terminal-specific Koffset is newly configured.

The embodiments of the present disclosure have been described above.

Note that, regarding determination method 1 and determination method 2 for determining the PRACH transmission timing, Embodiment 1 has been described in relation to an example in which cell-specific Koffset is used, but the present invention is not limited thereto, and determination method 1 and determination method 2 may be applied, for example, to the case where terminal-specific Koffset is used as in Embodiment 2 or 3.

The above embodiments have been described in relation to the case where triggering the RACH by base station 100 is indicated to terminal 200 by the PDCCH (or DCI), but the present invention is not limited thereto. For example, triggering the RACH may be indicated to terminal 200 by RRC information or other information such as MAC CE. For example, the information on the RO and the information on Koffset used for determining an RO for handover may be indicated to (or configured for) terminal 200 by an RRC parameter (or RRC information), and terminal 200 may determine the RO for RACH transmission to a handover destination cell based on the indicated information.

Further, each timing in each of the above-described embodiments may be defined by the transmission timing of base station 100. For example, when terminal 200 transmits an uplink signal such as a PRACH in "slot k later by N slots than the PDCCH transmission slot," terminal 200 may transmit the PRACH after performing timing adjustment (Timing Advance) such that base station 100 receives the uplink signal in slot k. Note that each timing in each of the above-described embodiments may not only be defined by the transmission timing of base station 100, but also defined by the transmission or reception timing of another apparatus (for example, terminal 200).

In the above embodiments, when an RO is determined based on terminal-specific Koffset, cell-specific Koffset, or a separately indicated offset that is different from Koffset, and when the process of terminal 200 is not in time for the timing designated by base station 100, terminal 200 may transmit the PRACH in or after the next RO of the designated RO. Examples of the case in which the process of terminal 200 is not in time for the designated timing include a case in which a timing prior to the next available RO is designated. In addition, when the process of terminal 200 is not in time for the designated timing, terminal 200 may, for example, determine that some inconsistency in recognition has occurred between terminal 200 and base station 100 and transmit a contention based RACH at any timing in order to prompt RRC reconfiguration, or may initiate a Radio Link Failure (RLF) procedure. Accordingly, quick recovery from the inconsistency in recognition is possible.

Further, in the above embodiments, application of cell-specific Koffset and terminal-specific Koffset is not limited to the transmission timing for the PRACH, and cell-specific Koffset and terminal-specific Koffset may be used for other timings such as, for example, the transmission timing for HARQ-ACK to a PDSCH, the transmission timing for a PUSCH for a PDCCH for scheduling the PUSCH, the reference timing for quality measurement at the time of a CSI report, or the timing for reflecting MAC CE. Further, any other offset values may substitute for Koffset when the offset is for correcting a delay. For example, an RTT estimated at terminal 200 (or a delay time based on the round trip time between base station 100 and terminal 200) may be used instead of Koffset.

In the above embodiments, cell-specific Koffset may be replaced with beam-specific Koffset.

Further, the above embodiments may be applied to RACH transmissions indicated by RRC signaling, such as RACH transmissions at the time of handover, for example. At this time, the reference timing for the offset may be, for example, a timing at which an RRC message triggering a RACH transmission is transmitted, or may be separately indicated. In addition, the above embodiments are applicable not only during handover but also during indication of a RACH transmission timing even for other applications.

Further, in the above embodiments, the slot length varies depending on, for example, a subcarrier spacing (SCS). Also, for example, the SCS of the PRACH may differ from the SCS of another channel (e.g., PDSCH or PUSCH). For example, when the SCS of the PRACH differs from the SCS of another channel, the SCS used to count the number of slots (e.g., referred to as "reference SCS") may be set to 15 kHz in frequency region 1 (FR1) and set to 60 kHz in frequency region 2 (FR2) as in Rel. 15. In addition, Koffset or the offset in the above embodiments may be normalized based on following Expression 1:

[1]

$$\text{Offset} = \left\lceil \frac{\text{Koffset}}{2^{\left(\mu - \mu_{reference}\right)}} \right\rceil \qquad \dots \text{(Expression 1)}.$$

$\mu$ (= 0,1,2 or 3) is a value resulting in a PUSCH SCS of $15 \cdot 2^{\mu}$

$\mu_{reference}$ is the reference SCS of the PRACH

The various parameters in the above embodiments are examples, and may be other numerical values. For example, the number of types of SSB is not limited to four types as illustrated in FIGS. 10, 11, and 12, and may be another number. The number of types of the RO is not limited to four types or eight types as illustrated in FIGS. 10, 11, and 12, and may be another number. The number of ROs included in each RACH slot is not limited to two or four as illustrated in FIGS. 10, 11, and 12, but may be another number.

Further, although the RO is determined based on the timing delayed by Koffset slots from the transmission slot of the PDCCH for RACH trigger, an offset considering a terminal process delay or the like may also be added, for example.

Further, the above-described embodiments have been described in relation to the use of the "next available RO" as an example of configuration of the RO, but an available RO is not limited to the "next available RO," and for example, any one of the ROs which are available at or after the next time may be configured.

Further, the embodiments described above have been described by taking the NTN environment (e.g., a satellite communication environment) as an example, but the present disclosure is not limited thereto. The present disclosure may be applied to other communication environments (e.g., terrestrial cellular environment in LTE and NR).

In the above-described embodiments, GNSS (for example, location detection using a satellite signal) such as a GPS is used, but location detection by a terrestrial cellular base station, location detection using at least one of a WiFi signal and a Bluetooth (registered trademark) signal, location detection using an accelerometer or the like, or location detection by combining them may be performed. Further, the location information may include information on altitude in addition to latitude and longitude. Furthermore, the location information may be a value of a separately defined coordinate system. The altitude information may be obtained from an atmospheric pressure sensor or the like.

Further, in the above-described embodiments, the signals and the information broadcast by base station 100 may be transmitted using at least one of SSB and SIB, or may be transmitted by methods that allow reception by a plurality of terminals, for example, using a group-common DCI format (DCI format 2_x and the like).

Further, in the above-described embodiments, the cell may be an area defined by at least one of the reception power of an SSB and a CSI-RS transmitted by the base station (or the satellite), or may be an area defined by a geographical location. Further, the cell in the above-described embodiments may be replaced with a beam defined by an SSB.

The base station may be referred to as gNodeB or gNB. Further, the terminal may be referred to as UE.

A slot may be replaced with a time slot, a mini-slot, a frame, a subframe, or the like.

Further, in the above-described embodiments, the mode of the satellite communication may be a mode in which the function of the base station exists on the satellite (for example, "regenerative satellite"), or a mode in which the function of the base station exists on the ground and the satellite relays the communication between the base station and the terminal (for example, "transparent satellite"). In other words, for example, in one exemplary embodiment of the present disclosure, the downlink and uplink may be links between a terminal and a satellite or links via a satellite.

One exemplary embodiment of the present disclosure is also applicable to any type of satellite, such as GEOs, medium orbit satellites (Medium Earth Orbit (MEO) satellites), LEOs, or high orbit satellites (Highly Elliptical Orbit (HEO) satellites). Further, one exemplary embodiment of the present disclosure may, for example, be applied to non-terrestrial communication such as that performed by a HAPS or a drone base station.

Further, in the above-described embodiments, the radio wave propagation speed is described as approximately $3 \times 10^8$ [m/s], but the present disclosure is not limited thereto, and a value such as $2.99792 \times 10^8$ [m/s] may be used, for example. The accuracy of the radio wave propagation speed may depend on implementation.

Although the 4-step random access has been described in the above-described embodiments, the random access procedure is not limited to this and may be, for example, 2-step random access.

Further, any component termed with "processor" or with a suffix, such as "-er," "-or," or "-ar" in the above-described embodiments may be replaced with other terms such as "circuit (circuitry)," "device," "unit," or "module."

(Supplement)

Information indicating whether or not terminal 200 supports the functions, operations, or processes described in the above-described embodiments may be transmitted (or indicated) from terminal 200 to base station 100 as, for example, capability information or capability parameters of terminal 200.

The capability information may include an information element (IE) indicating whether or not terminal 200 supports at least one of the functions, operations, or processes described in the above-described embodiments. Alternatively, the capability information may include an information element indicating whether or not terminal 200 supports a combination of any two or more of the functions, operations, or processes described in the above-described embodiments.

Based on, for example, capability information received from terminal 200, base station 100 may determine (or otherwise decide or assume) a function, operation, or process supported (or not supported) by terminal 200 which transmitted the capability information. Base station 100 may perform the operation, processing, or control according to a determination result based on the capability information. For example, base station 100 may control allocation (i.e., scheduling) of at least one of a downlink resource such as a PDCCH or PDSCH and an uplink resource such as a PUCCH or PUSCH based on the capability information received from terminal 200.

Note that not supporting, by terminal 200, some of the functions, operations, or processes described in each of the above-described embodiments may be read as restrictions on some of such functions, operations, or processes in terminal 200. For example, information or requests regarding such restrictions may be indicated to base station 100.

The information regarding the capability or restrictions of terminal 200 may be defined, for example, in a standard, or may be implicitly indicated to base station 100 in association with information known to base station 100 or information transmitted to base station 100.

(Control Signal)

In the present disclosure, the downlink control signal (or downlink control information) according to one exemplary embodiment of the present disclosure may be a signal (or information) transmitted in a Physical Downlink Control Channel (PDCCH) in a physical layer, for example, or may be a signal (or information) transmitted in a Medium Access Control Control Element (MAC CE) or a Radio Resource Control (RRC) in a higher layer. Further, the signal (or information) is not limited to that notified by the downlink control signal, but may be predefined in the specifications (or standard) or may be preconfigured for the base station and the terminal.

In the present disclosure, the uplink control signal (or uplink control information) relating to the exemplary embodiment of the present disclosure may be, for example, a signal (or information) transmitted in a PUCCH of the physical layer or a signal (or information) transmitted in the MAC CE or RRC of the higher layer. In addition, the signal (or information) is not limited to a case of being indicated by the uplink control signal and may be previously specified by the specifications (or standards) or may be previously configured in a base station and a terminal. Further, the uplink control signal may be replaced with, for example, uplink control information (UCI), 1st stage sidelink control information (SCI), or 2nd stage SCI.

(Base Station)

In one exemplary embodiment of the present disclosure, the base station may be a transmission reception point (TRP), a clusterhead, an access point, a remote radio head (RRH), an eNodeB (eNB), a gNodeB (gNB), a base station (BS), a base transceiver station (BTS), a base unit, or a gateway, for example. Furthermore, in the sidelink communication, the terminal may play a role of a base station. Further, instead of the base station, a relay apparatus that relays communication between a higher node and a terminal may be used. Moreover, a road side device may be used.

(Uplink/Downlink/Sidelink)

One exemplary embodiment of the present disclosure may be applied to, for example, any of the uplink, downlink, and sidelink. For example, one exemplary embodiment of the present disclosure may be applied to a Physical Uplink Shared Channel (PUSCH), a Physical Uplink Control Channel (PUCCH), and a Physical Random Access Channel (PRACH) in the uplink, a Physical Downlink Shared Channel (PDSCH), PDCCH or a Physical Broadcast Channel (PBCH) in the downlink, or a Physical Sidelink Shared Channel (PSSCH), a Physical Sidelink Control Channel (PSCCH), a Physical Sidelink Broadcast Channel (PSBCH) in the sidelink.

The PDCCH, the PDSCH, the PUSCH, and the PUCCH are examples of a downlink control channel, a downlink data channel, an uplink data channel, and an uplink control channel, respectively. Further, the PSCCH and the PSSCH are examples of a sidelink control channel and a sidelink data channel, respectively. Further, the PBCH and the PSBCH are examples of a broadcast channel, and the PRACH is an example of a random access channel.

(Data Channels/Control Channels)

One exemplary embodiment of the present disclosure may be applied to, for example, any of a data channel and a control channel. In one example, a channel in one exemplary embodiment of the present disclosure may be replaced with any of a PDSCH, a PUSCH, and a PSSCH for the data channel, or a PDCCH, a PUCCH, a PBCH, a PSCCH, and a PSBCH for the control channel.

(Reference Signals)

In one exemplary embodiment of the present disclosure, the reference signals are, for example, signals known to both a base station and a mobile station and each reference signal may be referred to as a reference signal (RS) or sometimes a pilot signal. The reference signal may be any of a Demodulation Reference Signal (DMRS), a Channel State Information-Reference Signal (CSI-RS), a Tracking Reference Signal (TRS), a Phase Tracking Reference Signal (PTRS), a Cell-specific Reference Signal (CRS), or a Sounding Reference Signal (SRS).

(Time Intervals)

In one exemplary embodiment of the present disclosure, the units of time resources are not limited to one or a combination of slots and symbols, but may be time resource units such as, for example, frames, superframes, subframes, slots, time slot subslots, minislots, or symbols, Orthogonal Frequency Division Multiplexing (OFDM) symbols, Single Carrier-Frequency Division Multiplexing (SC-FDMA) symbols, or other time resource units. The number of symbols included in one slot is not limited to any number of symbols exemplified in the embodiments described above and may be other numbers of symbols.

(Frequency Band)

One exemplary embodiment of the present disclosure may be applied to either of a licensed band or an unlicensed band.

(Communication)

One exemplary embodiment of the present disclosure may be applied to any of communication between a base station and a terminal (Uu link communication), communication between a terminal and a terminal (Sidelink communication), and communication of a Vehicle to Everything (V2X). In one example, a channel in one exemplary embodiment of the present disclosure may be replaced with any of a PSCCH, a PSSCH, a Physical Sidelink Feedback Channel (PSFCH), a PSBCH, a PDCCH, a PUCCH, a PDSCH, a PUSCH, and a PBCH.

Further, one exemplary embodiment of the present disclosure may be applied to either of terrestrial networks or a non-terrestrial network (NTN) such as communication using a satellite or a high-altitude pseudolite (High Altitude Pseudo Satellite (HAPS)). Further, one exemplary embodiment of the present disclosure may be applied to a terrestrial network having a large transmission delay compared to the symbol length or slot length, such as a network with a large cell size and/or an ultra-wideband transmission network.

(Antenna Ports)

In one exemplary embodiment of the present disclosure, the antenna port refers to a logical antenna (antenna group) configured of one or more physical antennae. For example, the antenna port does not necessarily refer to one physical antenna and may refer to an array antenna or the like configured of a plurality of antennae. In one example, the number of physical antennae configuring the antenna port may not be specified, and the antenna port may be specified as the minimum unit with which a terminal station can transmit a Reference signal. Moreover, the antenna port may be specified as the minimum unit for multiplying a weight of a Precoding vector.

<5G NR System Architecture and Protocol Stack>

3GPP has been working at the next release for the 5th generation cellular technology, simply called 5G, including the development of a new radio access technology (NR) operating in frequencies ranging up to 100 GHz. The first version of the 5G standard was completed at the end of 2017, which allows proceeding to 5G NR standard-compliant trials and commercial deployments of terminals (e.g., smartphones).

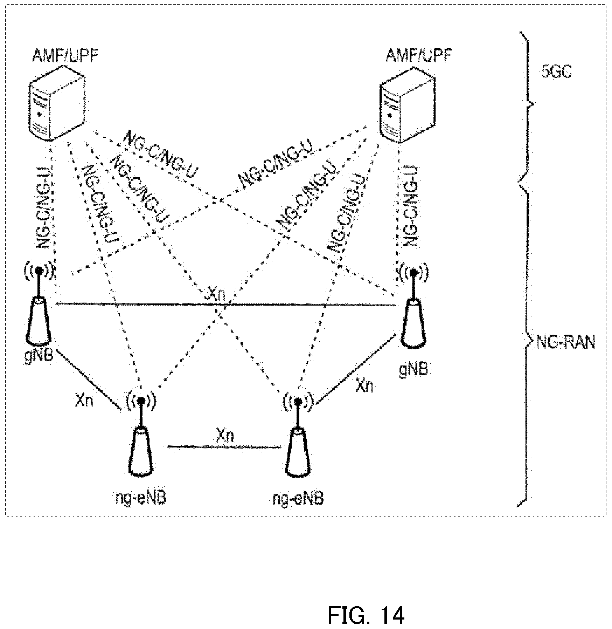

For example, the overall system architecture assumes an NG-RAN (Next Generation-Radio Access Network) that includes gNBs, providing the NG-radio access user plane (SDAP/PDCP/RLC/MAC/PHY) and control plane (RRC) protocol terminations towards the UE. The gNBs are interconnected with each other by means of the Xn interface. The gNBs are also connected by means of the Next Generation (NG) interface to the NGC (Next Generation Core), more specifically to the AMF (Access and Mobility Management Function) (e.g. a particular core entity performing the AMF) by means of the NG-C interface and to the UPF (User Plane Function) (e.g. a particular core entity performing the UPF) by means of the NG-U interface. The NG-RAN architecture is illustrated in FIG. 14 (see e.g., 3GPP TS 38.300 v15.6.0, section 4).

The user plane protocol stack for NR (see e.g., 3GPP TS 38.300, section 4.4.1) includes the PDCP (Packet Data Convergence Protocol, see clause 6.4 of TS 38.300), RLC (Radio Link Control, see clause 6.3 of TS 38.300) and MAC (Medium Access Control, see clause 6.2 of TS 38.300) sublayers, which are terminated in the gNB on the network side. Additionally, a new Access Stratum (AS) sublayer (SDAP, Service Data Adaptation Protocol) is introduced above the PDCP (see e.g., clause 6.5 of 3GPP TS 38.300). A control plane protocol stack is also defined for NR (see for instance TS 38.300, section 4.4.2). An overview of the Layer 2 functions is given in clause 6 of TS 38.300. The functions of the PDCP, RLC, and MAC sublayers are listed respectively in clauses 6.4, 6.3, and 6.2 of TS 38.300. The functions of the RRC layer are listed in clause 7 of TS 38.300.

For instance, the Medium Access Control layer handles logical-channel multiplexing, and scheduling and scheduling-related functions, including handling of different numerologies.

The physical layer (PHY) is for example responsible for coding, PHY HARQ processing, modulation, multi-antenna processing, and mapping of the signal to the appropriate physical time-frequency resources. It also handles mapping of transport channels to physical channels. The physical layer provides services to the MAC layer in the form of transport channels. A physical channel corresponds to the set of time-frequency resources used for transmission of a particular transport channel, and each transport channel is mapped to a corresponding physical channel. Examples of the physical channel include a Physical Random Access Channel (PRACH), a Physical Uplink Shared Channel (PUSCH), and a Physical Uplink Control Channel (PUCCH) as uplink physical channels, and a Physical Downlink Shared Channel (PDSCH), a Physical Downlink Control Channel (PDCCH), and a Physical Broadcast Channel (PBCH) as downlink physical channels.

Use cases/deployment scenarios for NR could include enhanced mobile broadband (eMBB), ultra-reliable low-latency communications (URLLC), and massive machine type communication (mMTC), which have diverse requirements in terms of data rates, latency, and coverage. For example, eMBB is expected to support peak data rates (20Gbps for downlink and 10Gbps for uplink) and user-experienced data rates in the order of three times what is offered by IMT-Advanced. On the other hand, in case of URLLC, the tighter requirements are put on ultra-low latency (0.5 ms for UL and DL each for user plane latency) and high reliability (1-10-5 within 1 ms). Finally, mMTC may preferably require high connection density (1,000,000 devices/km$^2$ in an urban environment), large coverage in harsh environments, and extremely long-life battery for low cost devices (15 years).

Therefore, the OFDM numerology (e.g. subcarrier spacing, OFDM symbol duration, cyclic prefix (CP) duration, number of symbols per scheduling interval) that is suitable for one use case might not work well for another. For example, low-latency services may preferably require a shorter symbol duration (and thus larger subcarrier spacing) and/or fewer symbols per scheduling interval (aka, TTI) than an mMTC service. Furthermore, deployment scenarios with large channel delay spreads may preferably require a longer CP duration than scenarios with short delay spreads. The subcarrier spacing should be optimized accordingly to retain the similar CP overhead. NR may support more than one value of subcarrier spacing. Correspondingly, subcarrier spacings of 15 kHz, 30 kHz, and 60 kHz, and so forth. The symbol duration Tu and the subcarrier spacing $\Delta f$ are directly related through the formula $\Delta f = 1/Tu$. In a similar manner as in LTE systems, the term "resource element" can be used to denote a minimum resource unit being composed of one subcarrier for the length of one OFDM/SC-FDMA symbol.

In the new radio system 5G-NR for each numerology and carrier a resource grid of subcarriers and OFDM symbols is defined respectively for uplink and downlink. Each element in the resource grids is called a resource element and is identified based on the frequency index in the frequency domain and the symbol position in the time domain (see 3GPP TS 38.211 v15.6.0).

<Functional Split between NG-RAN and 5GC in 5G NR>

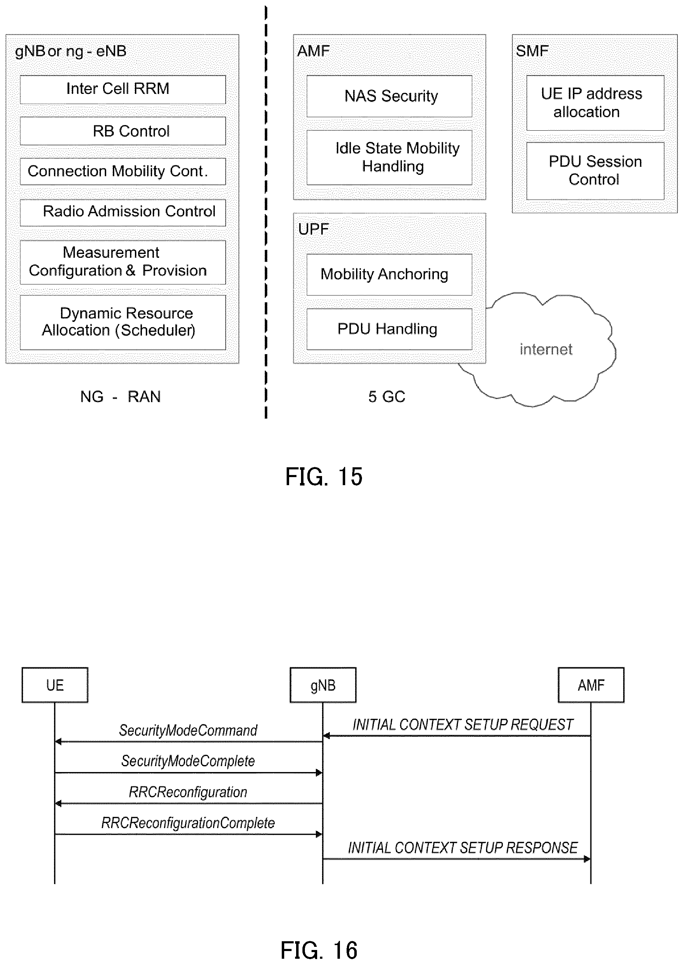

FIG. 15 illustrates the functional split between the NG-RAN and the 5GC. NG-RAN logical node is a gNB or ng-eNB. The 5GC has logical nodes AMF, UPF and SMF.

For example, gNB and ng-eNB hosts the following main functions:

- Functions for Radio Resource Management such as Radio Bearer Control, Radio Admission Control, Connection Mobility Control, Dynamic allocation of resources to UEs in both uplink and downlink (scheduling);
- IP header compression, encryption and integrity protection of data;
- Selection of an AMF at UE attachment when no routing to an AMF can be determined from the information provided by the UE;
- Routing of User Plane data towards UPF(s);
- Routing of Control Plane information towards AMF;
- Connection setup and release;
- Scheduling and transmission of paging messages;
- Scheduling and transmission of system broadcast information (originated from the AMF or Operation, Admission, Maintenance (OAM));
- Measurement and measurement reporting configuration for mobility and scheduling;
- Transport level packet marking in the uplink;
- Session Management;
- Support of Network Slicing;
- QoS Flow management and mapping to data radio bearers;
- Support of UEs in RRC_INACTIVE state;
- Distribution function for NAS messages;

- Radio access network sharing;
- Dual Connectivity;
- Tight interworking between NR and E-UTRA.

The Access and Mobility Management Function (AMF) hosts the following main functions:

- Function of Non-Access Stratum (NAS) signaling termination;
- NAS signaling security;
- Access Stratum, AS, Security control;
- Inter-Core Network (CN) node signaling for mobility between 3GPP access networks;
- Idle mode UE Reachability (including control and execution of paging retransmission);
- Registration Area management;
- Support of intra-system and inter-system mobility;
- Access Authentication;
- Access Authorization including check of roaming rights;
- Mobility management control (subscription and policies);
- Support of Network Slicing;
- Session Management Function (SMF) selection.

Furthermore, the User Plane Function, UPF, hosts the following main functions:

- Anchor point for Intra-/Inter-RAT mobility (when applicable);
- External Protocol Data Unit (PDU) session point of interconnect to Data Network;
- Packet routing & forwarding;
- Packet inspection and User plane part of Policy rule enforcement;
- Traffic usage reporting;
- Uplink classifier to support routing traffic flows to a data network;
- Branching point to support multi-homed PDU session;
- QoS handling for user plane, e.g. packet filtering, gating, UL/DL rate enforcement;
- Uplink Traffic verification (SDF to QoS flow mapping);
- Function of downlink packet buffering and downlink data notification triggering.

Finally, the Session Management function, SMF, hosts the following main functions:

- Session Management;
- UE IP address allocation and management;
- Selection and control of UP function;
- Configures traffic steering at User Plane Function, UPF, to route traffic to proper destination;
- Control part of policy enforcement and QoS;
- Downlink data notification.

<RRC Connection Setup and Reconfiguration Procedure>

FIG. 16 illustrates some interactions between a UE, gNB, and AMF (a 5GC Entity) performed in the context of a transition of the UE from RRC_IDLE to RRC_CONNECTED for the NAS part (see TS 38 300 v15.6.0).
RRC is a higher layer signaling (protocol) used for UE and gNB configuration. With this transition, the AMF prepares UE context data (which includes, for example, a PDU session context, security key, UE Radio Capability, UE Security Capabilities, and the like) and sends it to the gNB with an INITIAL CONTEXT SETUP REQUEST. Then, the gNB activates the AS security with the UE. This activation is performed by the gNB transmitting to the UE a Security-ModeCommand message and by the UE responding to the gNB with the SecurityModeComplete message. Afterwards, the gNB performs the reconfiguration to setup the Signaling Radio Bearer 2, SRB2, and Data Radio Bearer(s), DRB(s) by means of transmitting to the UE the RRCReconfiguration message and, in response, receiving by the gNB the RRCReconfigurationComplete from the UE. For a signaling-only connection, the steps relating to the RRCReconfiguration are skipped since SRB2 and DRBs are not set up. Finally, the gNB informs the AMF that the setup procedure is completed with the INITIAL CONTEXT SETUP RESPONSE.
Thus, the present disclosure provides a 5th Generation Core (5GC) entity (e.g., AMF, SMF, or the like) including control circuitry, which, in operation, establishes a Next Generation (NG) connection with a gNodeB, and a transmitter, which in operation, transmits an initial context setup message to the gNodeB via the NG connection such that a signaling radio bearer between the gNodeB and a User Equipment (UE) is set up. Specifically, the gNodeB transmits Radio Resource Control (RRC) signaling including a resource allocation configuration Information Element (IE) to the UE via the signaling radio bearer. Then, the UE performs an uplink transmission or a downlink reception based on the resource allocation configuration.

<Usage Scenarios of IMT for 2020 and beyond>

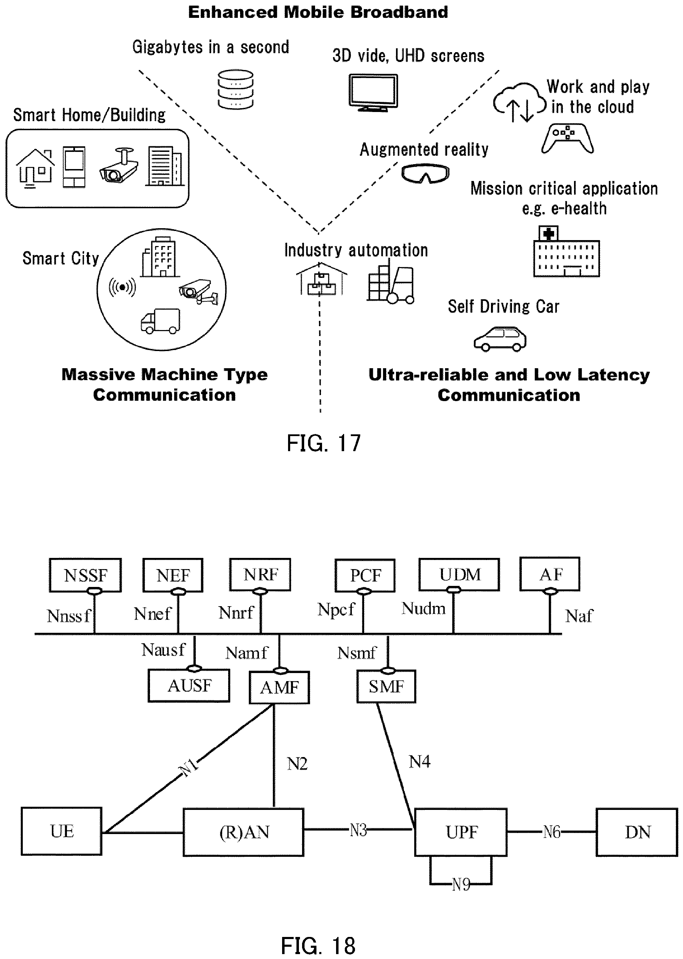

FIG. 17 illustrates some of the use cases for 5G NR. In 3rd generation partnership project new radio (3GPP NR), three use cases are being considered that have been envisaged to support a wide variety of services and applications by IMT-2020. The specification for the phase 1 of enhanced mobile-broadband (eMBB) has been concluded. In addition to further extending the eMBB support, the current and future work would involve the standardization for ultra-reliable and low-latency communications (URLLC) and massive machine-type communications (mMTC). FIG. 17 illustrates some examples of envisioned usage scenarios for IMT for 2020 and beyond (see e.g., ITU-R M.2083 FIG. 2).

The URLLC use case has stringent requirements for capabilities such as throughput, latency and availability. The URLLC use case has been envisioned as one of the enablers for future vertical applications such as wireless control of industrial manufacturing or production processes, remote medical surgery, distribution automation in a smart grid, transportation safety. Ultra-reliability for URLLC is to be supported by identifying the techniques to meet the requirements set by TR 38.913. For NR URLLC in Release 15, key requirements include a target user plane latency of 0.5 ms for UL (uplink) and 0.5 ms for DL (downlink). The general URLLC requirement for one transmission of a packet is a block error rate (BLER) of 1E-5 for a packet size of 32 bytes with a user plane latency of 1 ms.

From the physical layer perspective, reliability can be improved in a number of possible ways. The current scope for improving the reliability involves defining separate CQI tables for URLLC, more compact DCI formats, repetition of PDCCH, or the like. However, the scope may widen for achieving ultra-reliability as the NR becomes more stable and developed (for NR URLLC key requirements). Particular use cases of NR URLLC in Rel. 15 include Augmented Reality/Virtual Reality (AR/VR), e-health, e-safety, and mission-critical applications.

Moreover, technology enhancements targeted by NR URLLC aim at latency improvement and reliability improvement. Technology enhancements for latency improvement include configurable numerology, non slot-based scheduling with flexible mapping, grant free (configured grant) uplink, slot-level repetition for data channels, and downlink pre-emption. Pre-emption means that a transmission for which resources have already been allocated is stopped, and the already allocated resources are used for another transmission that has been requested later, but has lower latency / higher priority requirements. Accordingly, the already granted transmission is pre-empted by a later transmission. Pre-emption is applicable independent of the particular service type. For example, a transmission for a service-type A (URLLC) may be pre-empted by a transmission for a service type B (such as eMBB). Technology enhancements with respect to reliability improvement include dedicated CQI/MCS tables for the target BLER of 1E-5.

The use case of mMTC (massive machine type communication) is characterized by a very large number of connected devices typically transmitting a relatively low volume of non-delay sensitive data. Devices are required to be low cost and to have a very long battery life. From NR perspective, utilizing very narrow bandwidth parts is one possible solution to have power saving from UE perspective and enable long battery life.

As mentioned above, it is expected that the scope of reliability in NR becomes wider. One key requirement to all the cases, for example, for URLLC and mMTC, is high reliability or ultra-reliability. Several mechanisms can be considered to improve the reliability from radio perspective and network perspective. In general, there are a few key potential areas that can help improve the reliability. Among these areas are compact control channel information, data/control channel repetition, and diversity with respect to frequency, time and/or the spatial domain. These areas are applicable to reliability in general, regardless of particular communication scenarios.

For NR URLLC, further use cases with tighter requirements have been identified such as factory automation, transport industry and electrical power distribution, including factory automation, transport industry, and electrical power distribution. The tighter requirements are higher reliability (up to 10-6 level), higher availability, packet sizes of up to 256 bytes, time synchronization up to the extent of a few $\mu$s (where the value can be one or a few $\mu$s depending on frequency range and short latency on the order of 0.5 to 1 ms (in particular a target user plane latency of 0.5 ms), depending on the use cases).

Moreover, for NR URLLC, several technology enhancements from physical layer perspective have been identified. Among these are PDCCH (Physical Downlink Control Channel) enhancements related to compact DCI, PDCCH repetition, increased PDCCH monitoring. Moreover, UCI (Uplink Control Information) enhancements are related to enhanced HARQ (Hybrid Automatic Repeat Request) and CSI feedback enhancements. Also PUSCH enhancements related to mini-slot level hopping and retransmission/repetition enhancements are possible. The term "mini-slot" refers to a Transmission Time Interval (TTI) including a smaller number of symbols than a slot (a slot comprising fourteen symbols).

<QoS Control>

The 5G QoS (Quality of Service) model is based on QoS flows and supports both QoS flows that require guaranteed flow bit rate (GBR QoS flows) and QoS flows that do not require guaranteed flow bit rate (non-GBR QoS Flows). At NAS level, the QoS flow is thus the finest granularity of QoS differentiation in a PDU session. A QoS flow is identified within a PDU session by a QoS flow ID (QFI) carried in an encapsulation header over NG-U interface.

For each UE, 5GC establishes one or more PDU Sessions. For each UE, the NG-RAN establishes at least one Data Radio Bearer (DRB) together with the PDU Session, e.g., as illustrated above with reference to FIG. 16. Further, additional DRB(s) for QoS flow(s) of that PDU session can be subsequently configured (it is up to NG-RAN when to do so). The NG-RAN maps packets belonging to different PDU sessions to different DRBs. NAS level packet filters in the UE and in the 5GC associate UL and DL packets with QoS Flows, whereas AS-level mapping rules in the UE and in the NG-RAN associate UL and DL QoS Flows with DRBs.

FIG. 18 illustrates a 5G NR non-roaming reference architecture (see TS 23.501 v16.1.0, section 4.23). An Application Function (AF), e.g., an external application server hosting 5G services, exemplarily described in FIG. 17, interacts with the 3GPP Core Network in order to provide services, for example to support application influence on traffic routing, accessing Network Exposure Function (NEF) or interacting with the Policy framework for policy control (see Policy Control Function, PCF), e.g., QoS control. Based on operator deployment, Application Functions considered to be trusted by the operator can be allowed to interact directly with relevant Network Functions. Application Functions not allowed by the operator to access directly the Network Functions use the external exposure framework via the NEF to interact with relevant Network Functions.

FIG. 18 illustrates further functional units of the 5G architecture, namely Network Slice Selection Function (NSSF), Network Repository Function (NRF), Unified Data Management (UDM), Authentication Server Function (AUSF), Access and Mobility Management Function (AMF), Session Management Function (SMF), and Data Network (DN), e.g., operator services, Internet access or 3rd party services. All of or a part of the core network functions and the application services may be deployed and running on cloud computing environments.

In the present disclosure, thus, an application server (for example, AF of the 5G architecture), is provided that includes: a transmitter, which, in operation, transmits a request containing a QoS requirement for at least one of URLLC, eMMB and mMTC services to at least one of functions (for example NEF, AMF, SMF, PCF, UPF, etc.) of the 5GC to establish a PDU session including a radio bearer between a gNodeB and a UE in accordance with the QoS requirement; and control circuitry, which, in operation, performs the services using the established PDU session.

The present disclosure can be realized by software, hardware, or software in cooperation with hardware. Each functional block used in the description of each embodiment described above can be partly or entirely realized by an LSI such as an integrated circuit, and each process described in the each embodiment may be controlled partly or entirely by the same LSI or a combination of LSIs. The LSI may be individually formed as chips, or one chip may be formed so as to include a part or all of the functional blocks. The LSI may include a data input and output coupled thereto. The LSI herein may be referred to as an IC, a system LSI, a super LSI, or an ultra LSI depending on a difference in the degree of integration.

However, the technique of implementing an integrated circuit is not limited to the LSI and may be realized by using a dedicated circuit, a general-purpose processor, or a special-purpose processor. In addition, a Field Programmable Gate Array (FPGA) that can be programmed after the manufacture of the LSI or a reconfigurable processor in which the connections and the settings of circuit cells disposed inside the LSI can be reconfigured may be used. The present disclosure can be realized as digital processing or analogue processing.

If future integrated circuit technology replaces LSIs as a result of the advancement of semiconductor technology or other derivative technology, the functional blocks could be integrated using the future integrated circuit technology. Biotechnology can also be applied.

The present disclosure can be realized by any kind of apparatus, device or system having a function of communication, which is referred to as a communication apparatus. The communication apparatus may comprise a transceiver and processing/control circuitry. The transceiver may comprise and/or function as a receiver and a transmitter. The transceiver, as the transmitter and receiver, may include an RF (radio frequency) module and one or more antennas. The RF module may include an amplifier, an RF modulator/demodulator, or the like. Some non-limiting examples of such a communication apparatus include a phone (e.g., cellular (cell) phone, smart phone), a tablet, a personal computer (PC) (e.g., laptop, desktop, netbook), a camera (e.g., digital still/video camera), a digital player (digital audio/video player), a wearable device (e.g., wearable camera, smart watch, tracking device), a game console, a digital book reader, a telehealth/telemedicine (remote health and medicine) device, and a vehicle providing communication functionality (e.g., automotive, airplane, ship), and various combinations thereof.

The communication apparatus is not limited to be portable or movable, and may also include any kind of apparatus, device or system being non-portable or stationary, such as a smart home device (e.g., an appliance, lighting, smart meter, control panel), a vending machine, and any other "things" in a network of an "Internet of Things (IoT)."

The communication may include exchanging data through, for example, a cellular system, a wireless LAN system, a satellite system, etc., and various combinations thereof.

The communication apparatus may comprise a device such as a controller or a sensor which is coupled to a communication device performing a function of communication described in the present disclosure. For example, the communication apparatus may comprise a controller or a sensor that generates control signals or data signals which are used by a communication device performing a communication function of the communication apparatus.

The communication apparatus also may include an infrastructure facility, such as a base station, an access point, and any other apparatus, device or system that communicates with or controls apparatuses such as those in the above non-limiting examples.

A terminal according to an embodiment of the present disclosure includes: control circuitry, which, in operation, determines a transmission occasion based on a control signal related to uplink transmission using either of a cell-specific offset and a parameter different from the cell-specific offset; and transmission circuitry, which, in operation, performs the uplink transmission in the transmission occasion.

In one exemplary embodiment of the present disclosure, the control circuitry uses the cell-specific offset when the uplink transmission is triggered by the control signal.

In one exemplary embodiment of the present disclosure, the control circuitry selects an earliest transmission occasion from among transmission occasions later than a timing that is based on the cell-specific offset.

In one exemplary embodiment of the present disclosure, the control circuitry selects a transmission occasion included in a set of transmission occasions later than a timing that is based on the cell-specific offset.

In one exemplary embodiment of the present disclosure, the control signal includes information indicating use of one of the cell-specific offset and the parameter.

In one exemplary embodiment of the present disclosure, the parameter is either of a terminal-specific offset and a parameter related to the transmission occasion available to the terminal.

In one exemplary embodiment of the present disclosure, the control signal includes one of first information associated with the cell-specific offset and second information associated with the parameter.

In one exemplary embodiment of the present disclosure, the uplink signal is a signal of a random access channel (RACH), the first information includes information indicating a contention based RACH, and the second information includes information indicating a non-contention based RACH.

In one exemplary embodiment of the present disclosure, the parameter is an offset different from each of the cell-specific offset and terminal-specific offset.

In one exemplary embodiment of the present disclosure, the offset is an offset in units of slot including the transmission occasion.

In one exemplary embodiment of the present disclosure, the offset is an offset in units of the transmission occasion.

A base station according to an embodiment of the present disclosure includes: control circuitry, which, in operation, determines a transmission occasion based on a control signal related to uplink reception using either of a cell-specific offset and a parameter different from the cell-specific offset; and reception circuitry, which, in operation, performs the uplink reception in the transmission occasion.

A communication method according to one exemplary embodiment of the present disclosure includes steps performed by a terminal of determining a transmission occasion based on a control signal related to uplink transmission using either of a cell-specific offset and a parameter different from the cell-specific offset; and performing the uplink transmission in the transmission occasion.

A communication method according to one exemplary embodiment of the present disclosure includes steps performed by a base station of determining, based on a control signal related to uplink reception, which of a terminal-specific first offset and a cell-specific second offset is to be used; and performing the uplink reception based on an offset determined.

The disclosure of Japanese Patent Application No. 2021-055853, filed on March 29, 2021, including the specification, drawings and abstract, is incorporated herein by reference in its entirety.

Industrial Applicability

One aspect of the present disclosure is useful in radio communication systems.

Reference Signs List

100 Base station

101, 206 Antenna
102, 207 Radio receiver
103 PRACH detector
104 Data reception processor
105 Timing control information generator
106, 202 Data generator
107 Data transmission processor
108, 205 Radio transmitter
109, 209 Controller
200 Terminal
201 PRACH generator
203 Location information obtainer
204 Timing adjuster
208 Demodulator/decoder

**Claims**

1. A terminal, comprising:

   control circuitry, which, in operation, determines a transmission occasion based on a control signal related to uplink transmission using either of a cell-specific offset and a parameter different from the cell-specific offset; and
   transmission circuitry, which, in operation, performs the uplink transmission in the transmission occasion.

2. The terminal according to claim 1, wherein
   the control circuitry uses the cell-specific offset when the uplink transmission is triggered by the control signal.

3. The terminal according to claim 2, wherein
   the control circuitry selects an earliest transmission occasion from among transmission occasions later than a timing that is based on the cell-specific offset.

4. The terminal according to claim 1, wherein
   the control circuitry selects a transmission occasion included in a set of transmission occasions later than a timing that is based on the cell-specific offset.

5. The terminal according to claim 1, wherein
   the control signal includes information indicating use of one of the cell-specific offset and the parameter.

6. The terminal according to claim 5, wherein
   the parameter is either of a terminal-specific offset and a parameter related to the transmission occasion available to the terminal.

7. The terminal according to claim 1, wherein
   the control signal includes one of first information associated with the cell-specific offset and second information associated with the parameter.

8. The terminal according to claim 7, wherein:

   the uplink signal is a signal of a random access channel (RACH),
   the first information includes information indicating a contention based RACH, and
   the second information includes information indicating a non-contention based RACH.

9. The terminal according to claim 1, wherein
   the parameter is an offset different from each of the cell-specific offset and terminal-specific offset.

10. The terminal according to claim 9, wherein
    the offset is an offset in units of slot including the transmission occasion.

**11.** The terminal according to claim 9, wherein
the offset is an offset in units of the transmission occasion.

**12.** A base station, comprising:

control circuitry, which, in operation, determines a transmission occasion based on a control signal related to uplink reception using either of a cell-specific offset and a parameter different from the cell-specific offset; and
reception circuitry, which, in operation, performs the uplink reception in the transmission occasion.

**13.** A communication method, comprising steps performed by a terminal of:

determining a transmission occasion based on a control signal related to uplink transmission using either of a cell-specific offset and a parameter different from the cell-specific offset; and
performing the uplink transmission in the transmission occasion.

**14.** A communication method, comprising steps performed by a base station of

determining, based on a control signal related to uplink reception, which of a terminal-specific first offset and a cell-specific second offset is to be used; and
performing the uplink reception based on an offset determined.

<Terrestrial cellular>
Relation between DCI and PUSCH

slot $n$    slot $n+K_2$

gNB DL

DCI

gNB UL

UE DL

PUSCH

UE UL

(a)

<NTN>
Relation between DCI and PUSCH

slot $n$    slot $n+K_2$    slot $n+K_2+K_{offset}$

gNB DL

DCI

$K_{offset}$

gNB UL

UE DL

PUSCH

UE UL

(b)

FIG. 1

satellite

Service link

D_cell

D_UE

Feeder link

gNB

UE

FIG. 2

FIG. 3

EP 4 319 333 A1

PDCCH for RACH trigger

Koffset

gNB

RACH occasion (RO)

PDCCH
for RACH trigger

PRACH

UE
(near side)
gNB assumption

Transmittable in RO determined based on Koffset

PDCCH for RACH trigger

PRACH

UE
(far side)
Actual UE location

Not transmittable in RO determined based on Koffset

"next available RO"

FIG. 4

<u>100</u>

109 102

```
┌──────────────┐         ┌──────────────┐
│              │         │    Radio     │
│  Controller  │────────▶│   receiver   │
│              │         │              │
└──────────────┘         └──────────────┘
```

FIG. 5

<u>200</u>

209 205

```
┌──────────────┐         ┌──────────────┐
│              │         │    Radio     │
│  Controller  │────────▶│ transmitter  │
│              │         │              │
└──────────────┘         └──────────────┘
```

FIG. 6

FIG. 7

FIG. 8

FIG. 9

FIG. 10

EP 4 319 333 A1

EP 4 319 333 A1

Offset for RACH (N=3)

3rd RACH slot

FDM
(Frequency division
multiplexed)

PDCCH
for RACH trigger

| RACH slot | | RACH slot | | RACH slot | | RACH slot | |
|---|---|---|---|---|---|---|---|
| RO#2 SSB1 | RO#4 SSB2 | RO#6 SSB3 | RO#8 SSB4 | RO#2 SSB1 | RO#4 SSB2 | RO#6 SSB3 | RO#8 SSB4 |
| RO#1 SSB1 | RO#3 SSB2 | RO#5 SSB3 | RO#7 SSB4 | RO#1 SSB1 | RO#3 SSB2 | RO#5 SSB3 | RO#7 SSB4 |

gNB

time

Frame n

Frame n+1

FIG. 11

FIG. 12

FIG. 13

FIG. 14

gNB or ng - eNB

Inter Cell RRM

RB Control

Connection Mobility Cont.

Radio Admission Control

Measurement
Configuration & Provision

Dynamic Resource
Allocation (Scheduler)

NG - RAN

AMF

NAS Security

Idle State Mobility
Handling

UPF

Mobility Anchoring

PDU Handling

SMF

UE IP address
allocation

PDU Session
Control

internet

5 GC

## FIG. 15

UE          gNB          AMF

INITIAL CONTEXT SETUP REQUEST

SecurityModeCommand

SecurityModeComplete

RRCReconfiguration

RRCReconfigurationComplete

INITIAL CONTEXT SETUP RESPONSE

## FIG. 16

**Enhanced Mobile Broadband**

Gigabytes in a second

3D vide, UHD screens

Work and play
in the cloud

Smart Home/Building

Augmented reality

Mission critical application
e.g. e-health

Smart City

Industry automation

Self Driving Car

**Massive Machine Type
Communication**

**Ultra-reliable and Low Latency
Communication**

FIG. 17

| NSSF | NEF | NRF | PCF | UDM | AF |
|------|-----|-----|-----|-----|-----|

Nnssf  Nnef  Nnrf  Npcf  Nudm  Naf

Nausf  Namf  Nsmf

| AUSF | AMF | SMF |

N1  N2  N4

| UE | (R)AN | UPF | DN |

N3  N6

N9

FIG. 18

| | | |
|---|---|---|
| **INTERNATIONAL SEARCH REPORT** | International application No. | |
| | **PCT/JP2021/043181** | |

**A.    CLASSIFICATION OF SUBJECT MATTER**

*H04W 56/00*(2009.01)i; *H04W 72/04*(2009.01)i; *H04W 72/12*(2009.01)i; *H04W 74/08*(2009.01)i
FI:    H04W56/00 130; H04W72/12 150; H04W72/04 136; H04W74/08

According to International Patent Classification (IPC) or to both national classification and IPC

**B.    FIELDS SEARCHED**

Minimum documentation searched (classification system followed by classification symbols)

H04W56/00; H04W72/04; H04W72/12; H04W74/08

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
|---|---|---|
| X | CAICT, Timing relationship enhancements to support NTN [online], 3GPP TSG RAN WG1 #104-e R1-2100304, 18 January 2021 | 1, 4-14 |
| | pages 1-7, chapters 2, 3 | |
| A | | 2-3 |
| A | MEDIATEK INC., EUTELSAT. Timing relationship enhancements for NR-NTN [online]. 3GPP TSG RAN WG1 #104-e R1-2100594, 19 January 2021 | 1-14 |
| | pages 1-5 | |
| A | PANASONIC, NTN. Timing relationship enhancement [online]. 3GPP TSG RAN WG1 #104-e R1-2101024, 18 January 2021 | 1-14 |
| | pages 1-6 | |
| A | LG ELECTRONICS. Discussions on timing relationship enhancements in NTN [online]. 3GPP TSG RAN WG1 #104-e R1-2100703, 19 January 2021 | 1-14 |
| | pages 1-5 | |

| | | |
|---|---|---|
| ☑ Further documents are listed in the continuation of Box C. | ☐ See patent family annex. | |

\*    Special categories of cited documents:
"A"    document defining the general state of the art which is not considered to be of particular relevance
"E"    earlier application or patent but published on or after the international filing date
"L"    document which may throw doubts on priority claim(s) or which is cited to establish the publication date of another citation or other special reason (as specified)
"O"    document referring to an oral disclosure, use, exhibition or other means
"P"    document published prior to the international filing date but later than the priority date claimed

"T"    later document published after the international filing date or priority date and not in conflict with the application but cited to understand the principle or theory underlying the invention
"X"    document of particular relevance; the claimed invention cannot be considered novel or cannot be considered to involve an inventive step when the document is taken alone
"Y"    document of particular relevance; the claimed invention cannot be considered to involve an inventive step when the document is combined with one or more other such documents, such combination being obvious to a person skilled in the art
"&"    document member of the same patent family

| Date of the actual completion of the international search | Date of mailing of the international search report |
|---|---|
| **13 January 2022** | **22 February 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

**INTERNATIONAL SEARCH REPORT**

International application No.

**PCT/JP2021/043181**

**C.** **DOCUMENTS CONSIDERED TO BE RELEVANT**

| Category* | Citation of document, with indication, where appropriate, of the relevant passages | Relevant to claim No. |
|---|---|---|
| A | Moderator (ERICSSON). Feature lead summary#3 on timing relationship enhancements [online]. 3GPP TSG RAN WG1 #104-e R1-2102019, 03 February 2021<br>whole document | 1-14 |

Form PCT/ISA/210 (second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2021055853 A

**Non-patent literature cited in the description**

- Solutions for NR to support non-terrestrial networks (NTN) (Release 16). *3GPP, TR 38.821, V16.0.0,* December 2019

- Medium Access Control (MAC) protocol specification (Release 16). *3GPP, TS 38.321, V16.3.0,* December 2020